(19) **Europäisches Patentamt**
**European Patent Office**
**Office européen des brevets**

(11) **EP 3 370 080 B1**

(12) **EUROPEAN PATENT SPECIFICATION**

(45) Date of publication and mention of the grant of the patent:
**28.04.2021 Bulletin 2021/17**

(51) Int Cl.:
*G01S 7/486* (2020.01)    *G01S 17/10* (2020.01)

(21) Application number: **17305224.2**

(22) Date of filing: **01.03.2017**

(54) **RANGE AND PARAMETER EXTRACTION USING PROCESSED HISTOGRAMS GENERATED FROM A TIME OF FLIGHT SENSOR - PARAMETER EXTRACTION**

BEREICHS- UND PARAMETEREXTRAKTION MIT VERARBEITETEN, AUS EINEM FLUGZEITSENSOR ERZEUGTEN HISTOGRAMMEN   PARAMETEREXTRAKTION

EXTRACTION DE PARAMÈTRE ET DE PLAGE AU MOYEN D'HISTOGRAMMES TRAITÉS GÉNÉRÉS PAR L'EXTRACTION DE PARAMÈTRE D'UN CAPTEUR DE DURÉE DE VOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.09.2018 Bulletin 2018/36**

(73) Proprietors:
• **STMicroelectronics (Grenoble 2) SAS**
**38000 Grenoble (FR)**
• **STMicroelectronics (Research & Development) Limited**
**Buckinghamshire SL7 1EY (GB)**

(72) Inventors:
• **MOORE, John Kevin**
**Colinton, Edinburg, EH13 0QF (GB)**
• **MCLEOD, Stuart**
**Edinburg EH12 8QF (GB)**
• **BAXTER, Donald**
**Stirling FK7 8PZ (GB)**
• **MELLOT, Pascal**
**38250 Lans-en-Vercors (FR)**
• **DARGAN, Kenneth**
**Edinburg EH12 7PP (GB)**

(74) Representative: **Smith, Gary John et al**
**Page White & Farrer**
**Bedford House**
**John Street**
**London, WC1N 2BF (GB)**

(56) References cited:
**EP-A1- 2 088 453        DE-A1-102013 114 737**
**US-A1- 2013 175 435        US-A1- 2016 033 644**

• **MASSA J S ET AL: "Rangefinding using time correlated single photon counting", 3-D DIGITAL IMAGING AND MODELING, 1997. PROCEEDINGS., INTERNATIONAL CONFERENCE ON RECENT ADVANCES IN OTTAWA, ONT., CANADA 12-15 MAY 1, LOS ALAMITOS, CA, USA,IEEE COMPUT. SOC, US, 12 May 1997 (1997-05-12), pages 36-43, XP010234156, DOI: 10.1109/IM.1997.603846 ISBN: 978-0-8186-7943-8**
• **BULLER G ET AL: "Ranging and Three-Dimensional Imaging Using Time-Correlated Single-Photon Counting and Point-by-Point Acquisition", IEEE JOURNAL OF SELECTED TOPICS IN QUANTUM ELECTRONICS, IEEE SERVICE CENTER, PISCATAWAY, NJ, US, vol. 13, no. 4, 1 July 2007 (2007-07-01), pages 1006-1015, XP011191822, ISSN: 1077-260X, DOI: 10.1109/JSTQE.2007.902850**

EP 3 370 080 B1

**Description**

Some embodiments relate to range extraction and other parameters such as noise and maximum distance determination extracted from histogram data generated using a time-of-flight photosensitive sensor and in particular but not exclusively to an apparatus with a sensor comprising an array of photosensitive devices.

Devices for determining the distance (or range) to objects are known. One currently used method is called "Time of Flight" (ToF). This method comprises sending a light signal towards the object and measuring the time taken by the signal to travel to the object and back. The calculation of the time taken by the signal for this travel may be obtained by measuring the phase shift between the signal coming out of the light source and the signal reflected from the object and detected by a light sensor. Knowing this phase shift and the speed of light enables the determination of the distance to the object.

Single photon avalanche diodes (SPAD) may be used as a detector of reflected light. In general an array of SPADs are provided as a sensor in order to detect a reflected light pulse. A photon may generate a carrier in the SPAD through the photo electric effect. The photo generated carrier may trigger an avalanche current in one or more of the SPADs in an SPAD array. The avalanche current may signal an event, namely that a photon of light has been detected.

US 2013/0175435 A1 provides a method for detecting the presence of an object near a detection device, where a distance is determined based on a determined median timing value, where the median timing value is based on a weighted calculation of a number of photodetection events in each bin of a histogram representing the photodetection events within a time window.

US 2016/0033644 A1 provides a method for time of flight range detection, where peak detection or centre of mass calculations may be performed to identify a centre of the peaks in histogram data.

DE 10 2013 114 737 A1 provides a device where a number of photons arriving at a certain time are detected and a histogram of the received data built. A Gaussian or parabolic curve is then fitted to histogram bins which represent a reflection, wherein the position of the peak corresponds to a measured distance.

According to an aspect, there is provided a method as claimed in claim 1.

According to a second aspect there is provided an apparatus as claimed in claim 8.

Some embodiments will now be described by way of example only and with reference to the accompanying Figures in which:

Figure 1A shows schematically a system according to some embodiments comprising the sensor device and co-processor configured to determine a range from the sensor to an object;

Figure 1B shows a flow diagram of the operations of the system shown in Figure 1A;

Figure 2A shows schematically components which can be implemented within the processing device shown in Figure 1A;

Figure 2B shows a flow diagram of the operations of the processing device shown in Figure 2A;

Figure 3 shows an example of raw histogram data produced by a sensor device within the system shown in Figure 1 in some embodiments;

Figure 4A shows example probability of OR-tree pile-up event shadowing;

Figure 4B shows schematically an example pile-up corrector as shown in Figure 2A according to some embodiments;

Figure 4C shows a flow diagram of the operation of an example pile-up corrector as shown in Figure 4B according to some embodiments;

Figure 4D shows an example of pulse shaper weighting function as applied in the histogram bin scaler as shown in Figure 4B according to some embodiments;

Figure 4E shows a graph of the performance of a simulated correction applied by the pile-up corrector as shown in Figure 4B according to some embodiments;

Figure 5A show a sensor arrangement wherein crosstalk would be visible within the histogram generated by the sensor device;

Figure 5B shows an example histogram produced by the sensor arrangement shown in Figure 5A showing visible crosstalk at a single point on the sensor;

Figure 5C shows schematically an example cross-talk detector as shown in Figure 2A according to some embodiments;

Figure 5D shows a flow diagram of the operation of an example cross-talk detector as shown in Figure 5C according to some embodiments;

Figure 6A shows an example crosstalk distribution over a sensor surface;

Figures 6B to 6D show various spatial modelling for region of interests modelling of the cross-talk;

Figure 7A shows schematically a first example pulse detector and range extractor according to some embodiments;

Figure 7B shows a simulated two object example of the operation of the first example pulse detector and range extractor;

Figure 7C shows a further simulated two object example of the operation of the first example pulse detector and range extractor;

Figure 7D shows a simulated four object example of the operation of the first example pulse detector and range extractor;

Figure 8A shows schematically a second example pulse detector and range extractor according to some embodiments;

Figure 8B shows a simulated three object example and the operation of the second example pulse detector;

Figure 8C shows the simulated three object example and the operation of the second example range extractor for the first object;

Figures 8D to 8F shows further simulated multiple object examples of the operation of the second example pulse detector;

Figure 8G shows a flow diagram of the operation of the second example pulse detector and range extractor as shown in Figure 8A;

Figure 9 shows an example histogram plot and bin differences produced using the method shown in Figure 8G;

Figure 10 shows a flow diagram of a further example of range extraction by median determination method according to some embodiments; and

Figure 11 shows example histogram plots and bin differences produced using the method shown in Figure 10.

The concept in the embodiments herein is the implementation of processing of histogram data from a sensor device in order to be able detect or determine object pulses and furthermore to generate or extract parameters such as object distance or range, noise and maximum detection range having determined the object pulses. In some embodiments the processing of the histogram data may include the generation of adaptive width filters which may be applied to the sensor output histograms to filter out undesired cross-talk and assist in identifying median values which may be used to extract a suitable range or distance value in a time-of-flight sensor.

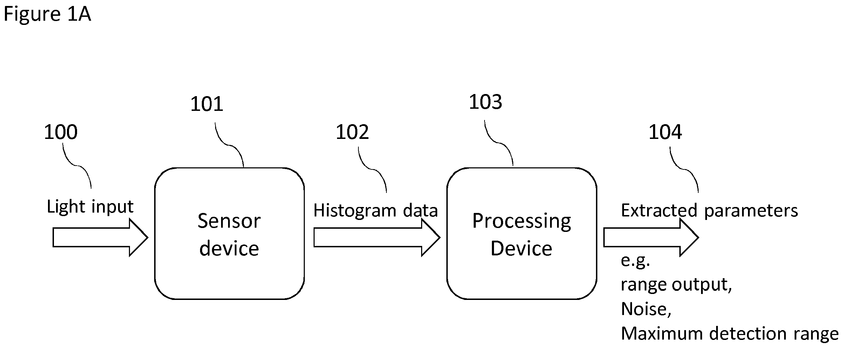

In Figure 1A a schematic view of an example system comprising a sensor device and processing device is shown. In the example shown in Figure 1A the system comprises a sensor device 101 which is configured to receive a light input 100 and is configured to output 'raw' histogram data 102 which is passed to the processing device 103. Furthermore the system comprises a sensor device 101 which is configured to receive the 'raw' histogram data and processes the 'raw' histogram data 102 to extract or generate suitable parameters such as a distance or range output 104 representing the distance between the sensor device and an object within the 'field-of-view' of the sensor device.

The sensor device 101 may comprise a light source (such as a vertical cavity surface emitting laser VCSEL or light emitting diode LED), a suitable light source driver, an array of single photon avalanche diode (SPAD) elements and a time to distance converter (TDC) or histogram generator configured to output the 'raw' histogram data representing photon event detection counts for a number of time bins. The histogram data 102 may be passed to the processing device 103. However other configurations may be implemented such as the sensor device comprising a light source, light source driver + a fast photodiode detector with steered charge, an analogue to digital converter (ADC) etc.

The sensor device 101 may for example comprise a generator/driver configured to provide a periodic electric signal (the periodic signal may for example be a square shaped signal or a sine shaped signal or any suitable periodic signal). The generator/driver may furthermore power the light source thus generating a 'modulated' light output.

As discussed above an example of a light source may be a light emitting diode, or any known lighting device, for example, a laser diode. The signal coming out of the light source is transmitted towards an object and is reflected by the object.

The reflected light signal is detected by a light sensor which in the following examples is an array of SPADs. The SPAD array may integrate several photo detection elements in the form of Single-photon avalanche diodes, or "SPADs" also called Geiger mode avalanche photodiodes. These devices have a reverse biased p-n junction in which a photo-generated carrier can trigger an avalanche current due to an impact ionization mechanism. SPADs may be designed to operate with a reverse bias voltage well above the breakdown voltage.

At an initial time, the diode is biased to a voltage larger than its breakdown voltage. The reception of a photon in the diode junction area starts an avalanche in the diode, which creates an electric pulse. The diode is then biased back to a voltage smaller than the breakdown voltage, so that the SPAD reacts again to the reception of a photon. SPADs can currently be used in cycles having reactivation periods shorter than 10 ns. Thereby, SPADs can be used at high frequency to detect objects at relatively short distances from the measurement device, for example, distances ranging from a few millimetres to several meters. In different embodiments, different ranges may be supported.

Such detection elements as discussed above may also be rapid charge transfer photodiodes. The signal output by the sensor is thus phase-shifted from the signal provided by the generator/driver by an angle which correlates with the distance to the object.

A Time to Digital Converter (TDC) may be configured to receive the signals generated by generator/driver and by the sensor and calculate the phase shift (or time difference) between these signals to obtain a distance to object.

The detector (SPAD array) is configured to generate many fast readings in a short time period and thus the time to distance converter may be configured to generate a histogram of detected events. For example, with a periodic pulsed system, the detected event arrival times may be quantized to build up histogram data which may be post processed to identify the position/distance of multiple targets within the Field of View.

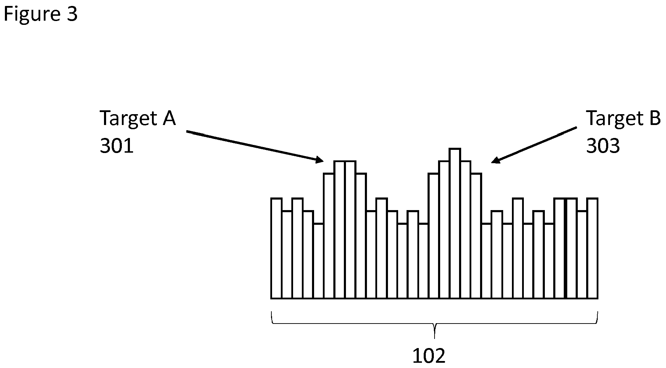

An example generated histogram may be shown in Figure 3. The example histogram data 102 is shown as a series of bars each bar representing a detected event frequency or event count for specific time bins or intervals. In the example shown in Figure 3 two target 'reflections' can be seen. The first, target A 301 is shown as a peak above an ambient level which occurs earlier than a second, target B 303 peak.

In some embodiments, a further reference detector within the sensor device is used. The reference detector is configured to receive the light emitted by the light source, and is close to the light source. The distance to the object may be determined using the timing difference between the reference detector receiving the light from the light source and the sensor receiving the light from the reflected object.

The histogram data based distance determination analysis as shown hereafter is applicable to any time of flight ranging application such as gesture analysis where the range output may be used as an input to algorithms to detect motion of a hand or other object to control an interface, and auto-focus assist where the range output may be used as a guide for an auto-focus scheme to speed up camera focus time.

The concept as described herein is the addition or integration of the processing device 103 with the sensor device 101. In some embodiments the processing device 103 is physically integrated with the sensor device 101. In other words the processing device is implemented in the same device as the sensor device. For example within register transfer level (RTL) synthesis or on board microcontroller unit (MCU) on the sensor device. In some embodiments the processing device 103 is logically integrated with the sensor device 101 but is implemented on a separate, dedicated processing device. In some further embodiments the processing device 103 is implemented as software on a host device configured to receive the output from the sensor device 101.

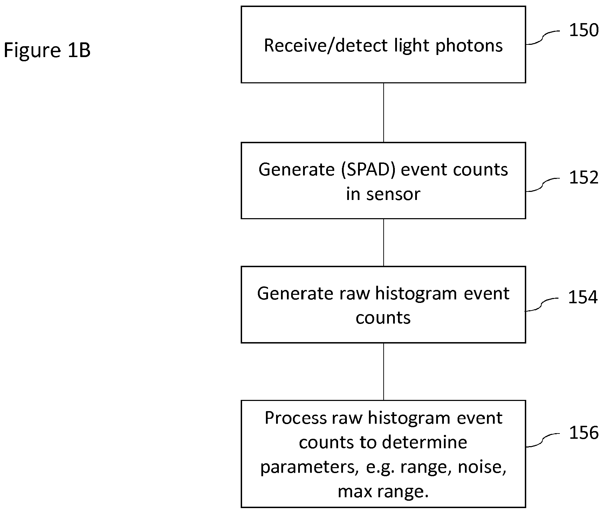

The integration of the processing device 103 and the sensor device 101 may for example be shown by the flow diagram shown in Figure 1B wherein the operations of the system as shown in Figure 1A are described.

Thus for example the method is shown wherein the light photons are received or detected. The operation of receiving/detecting the photons is shown in Figure 1B by step 150.

Then the sensor device may be configured to generate (SPAD) detected event counts. The operation of generating the (SPAD) event counts is shown in Figure 1B by step 152.

The raw histogram event counts may furthermore be then generated. The operation of generating the raw histogram event counts is shown in Figure 1B by step 154.

The raw histogram event counts may then be processed in order to determine parameters such as range, noise, and max detection range. The operation of processing the raw histogram even counts to determine the parameters is shown in Figure 1B by step 156.

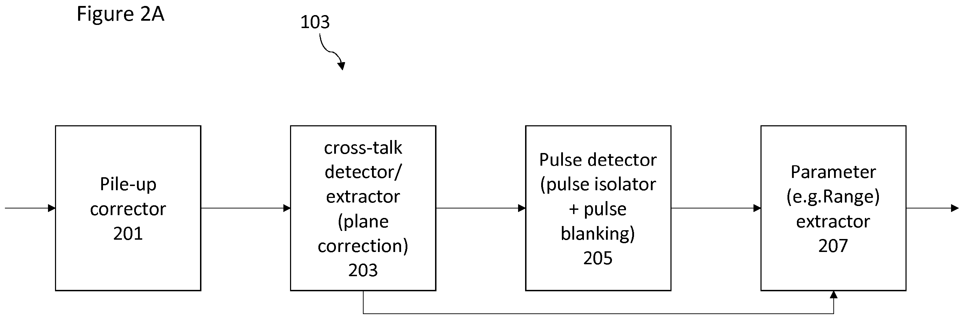

As described in further detail hereafter and as shown in Figure 2A the processor device may comprise various processing modules which may process the histogram data. In some embodiments the processor device comprises some but not all of the processing modules described hereafter.

For example as shown in Figure 2A the processor device 103 may comprise a pile-up corrector 201. The pile-up corrector 201 in some embodiments may be configured to receive the histogram data from the sensor device 101 and process the data to attempt to correct for pile-up errors in the histogram data. The operation of the pile-up corrector 201 is described in further detail later in the application. The corrected histogram data may in some embodiments be further passed to a cross-talk detector 203 (but in some embodiments may pass the corrected data to the pulse detector and/or parameter extractor.

In some embodiments the processor device 103 may comprise a cross-talk detector 203. The cross-talk detector 203 may be configured to receive the output of the pile-up corrector 201 (or in some embodiments where there is no pile-up corrector 201 receive the raw histogram data directly). The cross-talk detector 203 may thus determine whether the histogram data comprises cross-talk components and furthermore attempt to at least partially remove these components. The operation of the cross-talk detector is described in further detail later in the application. The cross-talk detector 203 may furthermore output the corrected histogram data to the pulse detector and/or parameter extractor.

In some embodiments the processor device comprises a pulse detector 205. The pulse detector 205 may be configured to receive the output of the cross-talk detector 203 (or the pile-up corrector 201) and be configured to detect and filter (or isolate or blank) pulses within the histogram data. The operation of the pulse detector is described in further detail later in the application. These determined pulses may be passed to the parameter extractor 207.

In some embodiments the processor device comprises a parameter extractor 207. The parameter extractor 207 may be configured to receive the output of the cross-talk detector 203 and/or the pulse detector 205 and be configured to extract suitable parameters, such as range from the detected pulses within the histogram data. The operation of the parameter extractor 207 is described in further detail later in the application. These parameters may be output.

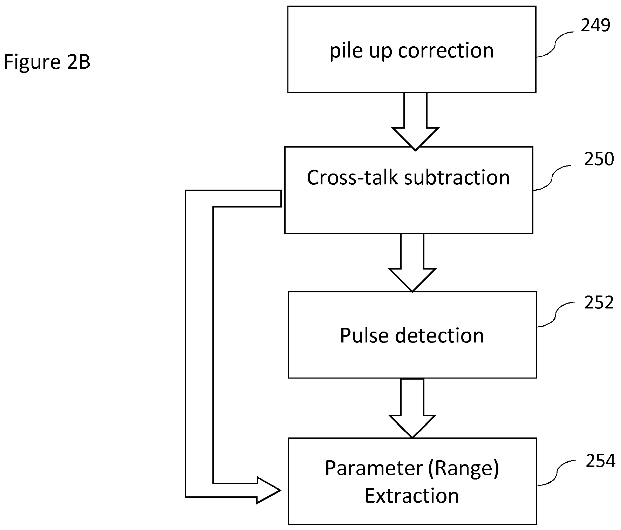

With respect to Figure 2B the operation of the processor device as shown in Figure 2A is described in further detail.

The method may comprise processing the received histogram data to attempt to correct for pile-up errors. The operation of the correcting for pile-up errors is shown in Figure 2B by step 249.

The method may further comprise detecting and correcting for cross-talk (in other words determining whether the histogram data comprises cross-talk components and furthermore attempting to at least partially remove these components. The operation of the detecting and subtracting cross-talk is shown in Figure 2B by step 250.

The method may further comprise detecting and filtering (or isolating or blanking) pulses within the histogram data. The operation of detecting and filtering (or isolating or blanking) pulses within the histogram data is shown in Figure 2B by step 252.

Furthermore in some embodiments the method may comprise extracting suitable parameters, such as range from the detected pulses within the histogram data. The operation of extracting or determining suitable parameters, such as range from the detected pulses within the histogram data is shown in Figure 2B in step 254.

We will now discuss the issues and problems with current systems and the aspects of the system shown above which address these problems.

As discussed above there are problems associated with current time-of-flight ranging schemes. Pile-up, for example, may be problematic. Pile-up is a term which refers to the issue found within SPAD based systems and can occur either at the SPAD or within the sensor within the OR tree level. At the SPAD level pile up occurs when a photon event occurs before a previous SPAD event is fully quenched and recharged. In the OR tree case, pile up occurs when the OR tree output is already high when another detected photon event arrives, resulting in the new event not being counted at the output.

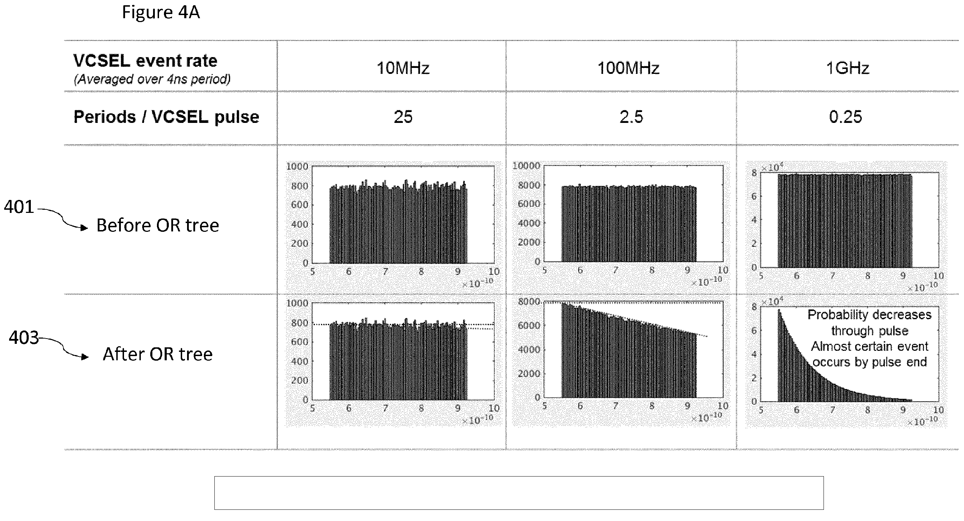

This effect for example can be shown with respect to Figure 4a. Figure 4a shows an example pile-up for various simulated event rates. There are shown three columns representing simulated VCSEL event rates of 10MHz, 100MHz and 1GHz. A first row 401 represents the probability of detecting an event counts for a time period before the OR tree, in other words before the effect of pile-up occur. The second row 403 represents the probability of detecting the event counts for a time period after the OR tree, in other words after the effect of pile-up occur. As can be seen the earlier events are detected with a higher probability as the earlier event 'shadows' the later event.

The effect of pile-up on the return from a target is that as there is higher probability of detecting earlier events the system will under range and produce a distance measurement which is systematically biased to produce a shorter distance value as a result.

Current approaches to address pile-up have been to implement a dynamic SPAD selection scheme. In other words dynamically turning off SPADs where high light conditions are detecting in an attempt to reduce the pile up effect. Similarly other attempts have been to place apertures over some SPADs within the system. Where high light levels are detected and therefore pile-up is likely to be present then a switch is made to use the aperture SPADs to reduce count rate.

Both of these approaches have the effect of reducing the total number of events received. This can be a problem if ambient light is high since the number of 'signal' photons received when reducing the total number of events will be low.

Furthermore these approaches result in spatial subsampling of the array. In order to achieve this some SPADs, and therefore areas of the sensor must be disabled to achieve the regulation.

Furthermore these approaches are typically applied in an iterative manner and thus may requires a number of iterations before the correct number of SPADs are enabled. This switching iteration may not be able to produce good quality output for challenging or fast changing scenes, for example where the ambient level changes quickly and dramatically.

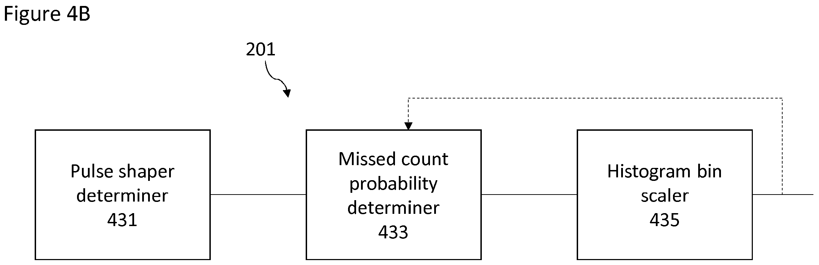

The concept applied in the pile-up corrector shown herein is shown schematically in Figure 4B.

The pile-up corrector in some embodiments comprises a pulse shaper determiner 431 configured to determine a filter length $t_{PULSE\_SHAPER}$ which may be applied to the histogram data to shape the histogram data output count event. The pulse shaper determiner 431 in some embodiments may be configured to determine the length of the filter $t_{PULSE\_SHAPER}$ by applying a pulse inversion method. A pulse inversion method can be summarised as:

Performing a first Ranging on the SPAD array output;
Performing a second ranging, this time inverting the SPAD array output;
Subtracting the range measurements to find the difference.

The pulse shaper determiner 431 in some embodiments may be configured to determine the length of the filter $t_{PULSE\_SHAPER}$ by applying a digital method. A digital method can be summarised as:

Search the histograms for 0->1 transition;
(determine falling edge via search for 1->0 transition);

Average the difference over multiple pulse in a low count scenario (for example using the reference array, a calibration mode, or a low DSS limit on return) to determine the learning of the filter pulse width.

In some embodiments the pile-up corrector 201 comprises a missed count probability determiner 433. The missed count probability determiner 433 in some embodiments may receive the output of the pulse shaper determiner 431 and the histogram bin data. Having determined the pulse shaper width an estimate of the counts in the bin and preceding bins before the pile-up effect may be determined by the missed count probability determiner 433.

The missed count probability determiner 433 may in some embodiments determine the probability of missed counts by applying weightings based on the pulse shaper width to the determined number of events which could cause pile-up. The weightings may be allocated on a bin by bin basis, accounting for pulse shaper width only partially overlapping a bin. Furthermore in some embodiments the first quantisation period and last quantisation period effect the bin in question approximately half the time.

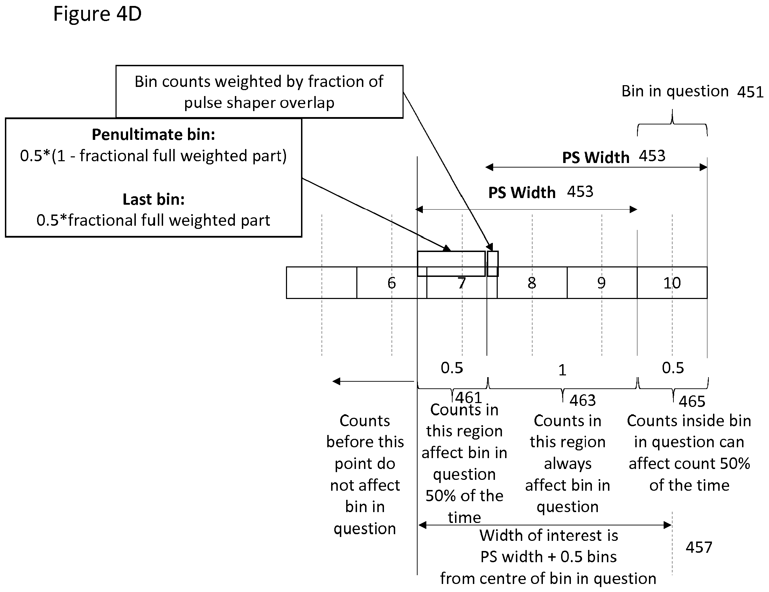

Figure 4D for example shows the weightings applied in an example probability determination. The example shows a series of histogram bins, numbered as bins 6, 7, 8, 9, and 10 of which the bin 10 is the one being analysed (or is the bin in question 451). The bin 10 has applied to it a first pulse shaper width PS Width 453 from the start of the bin and a second PS width from the end of the bin. Counts before the first pulse shaper width do not affect the bin in question as any events detected before this do not shadow the bin.

The width of interest 457 is thus defined as the PS width plus 0.5 bins from the centre of the bin in question. Furthermore there are defined three regions. A first region 465 which is within the actual bin. Any counts inside the bin in question can affect count probability for 50% of received events. A second region 463 defined by the overlap period of the first and second PS width where counts in this region always affect the probability of the bin in question. A third region 461 defined by the period covered by the first PS width only is where counts in this region affect the probability of the bin in question for 50% of the received events.

As the pulse shaper width may not be a whole number of bin widths the counts for the second and third regions may require a weighting function to be applied to the values. Thus for any fraction of a bin within the second region the bin counts may be multiplied by the determined fractional value. Similarly for the third region the bin counts may be multiplied by the determined fractional values and furthermore by the weighting effect of the third region (which as the counts in the area affect the bin in question only 50% of the time is 0.5).

Having determined the probability determination this information may be passed to a histogram bin scaler 435.

In some embodiments the pile-up corrector 201 comprises histogram bin scaler 435. The histogram bin scaler 435 may be configured to receive the output of the missed count probability determiner 433 and the histogram bin data. The histogram scaler then may add the determined count events from the missed count determiner 433 to the bin values. The histogram bin scaler furthermore in some embodiments is configured to correct the ambient estimate in a similar manner.

These processed values may then be output. In some embodiments the processed bin values may be feedback to the missed count probability determiner 433 to create a more accurate estimate of pile-up probability.

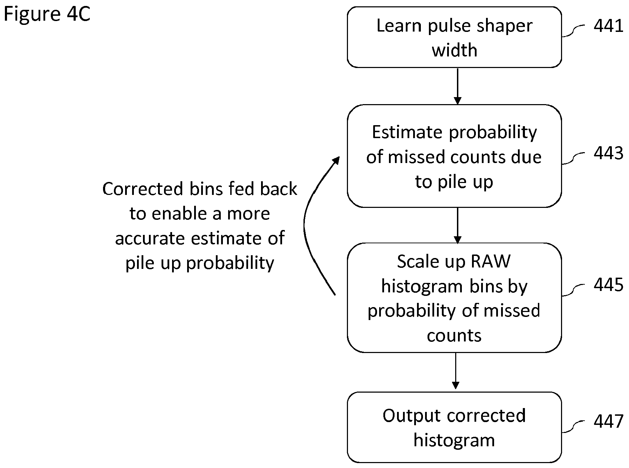

With respect to Figure 4C an example flow diagram of the pile-up correction operation is shown.

First the pulse shaper width is determined or learnt. The operation of learning the pulse shaper width is shown in Figure 4C by step 441.

Then the estimate of the probability of missed counts due to pile up using the pulse shaper width is determined. The estimating of the probability of missed counts due to pile-up is shown in Figure 4C by step 443.

Then the scaling up of the raw histogram bin by the probability of missed counts is performed. The scaling up of the raw histogram bin by the probability of missed counts is shown in Figure 4C by step 445.

In some embodiments this scaled up histogram data (or corrected bin data) may be passed back to enable more accurate estimates of the pile-up probability to be performed. This is shown in Figure 4C by the feedback arrow between step 445 and 443.

Then the corrected histogram data may be output. The outputting of the corrected histogram data is shown in Figure 4C by step 447.

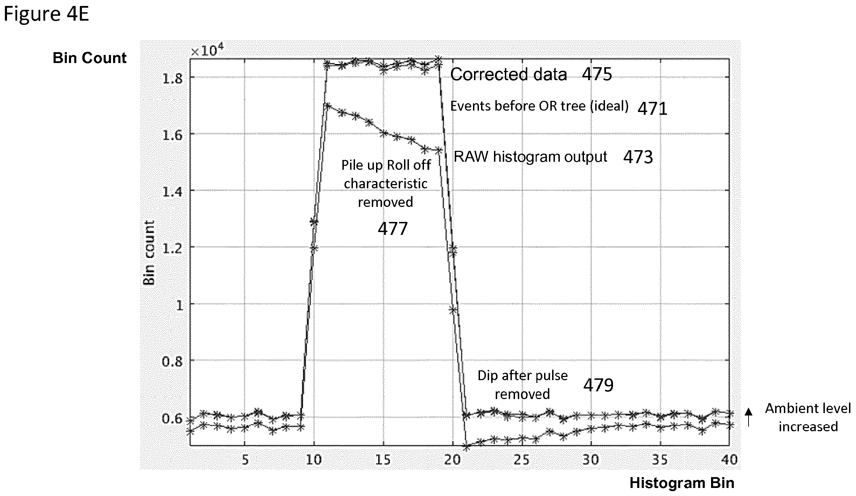

With respect to Figure 4E an example simulation of the effect of pile-up and the correction of pile-up using the pile-up corrector as described above is shown. The graph shows a series of bin count against bin plots where a pulse is generated and detected above an ambient level.

In the example shown the ideal (event count before OR tree) plot 471 is shown. Furthermore is shown the RAW histogram output plot 473 is shown. The plot shows the typical pile-up roll off characteristic during the pulse and furthermore a characteristic dip in the ambient count after the pulse. The corrected histogram plot 475 shows the pile-up roll off characteristic during the detected pulse removed 477. Furthermore the dip after the pulse in the ambient is removed 479 and the ambient level increased.

Although the examples shown above are with respect to a single pulse the pile-up corrector will produce similar corrections in multi-pulse and for modulated light (for example sine wave based) systems.

In some embodiments the pile-up corrector may be able to address the SPAD pile up effects. In these embodiments the pulse shaper may be disabled and a similar compensation operation performed on the histogram bins. In these embodiments the total event counts divided by number of SPADs enabled may be used to estimate a probability of SPAD pile up. Then the total counts are then scaled in the same way as before. Since a SPAD dead time (which can be in order of 10ns) can exceed the VCSEL period (which can be in order of 4ns), it is possible that some bins will be blocked from detection multiple times.

It has been demonstrated in simulations that the pile-up correction performs well for a range of event rates. However in some embodiments the pile-up corrector is further configured to determine when very high light levels and event rates are detected. As at very high event rates there are very high degrees of pile up it is possible that two light levels (a lower and higher light level) can result in the same output count rate. As this may cause errors in the correction from the histogram data the pile-up corrector may be configured to operate below a defined (very high) light level.

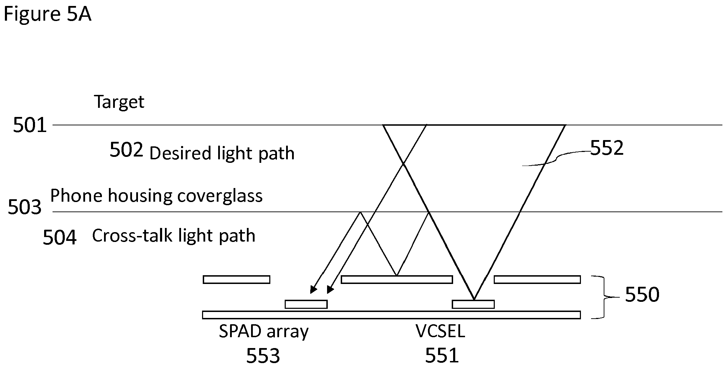

Other problems associated with current time-of-flight ranging schemes include cross-talk. Cross-talk is a term used to describe the effect of a parasitic light path on the histogram data generated by the sensor. Figure 5a for example shows a situation where cross-talk may interfere with the determination of range to a target object. In this example the sensor device 550 comprises a light source in the form of a VCSEL 551 which generates light 552. The light 552 may be reflected from the phone housing coverglass 503 along a cross-talk light path 504 to the SPAD array 553. The light 552 may also be reflected from the target 501 along a desired light path 502 to the SPAD array 553.

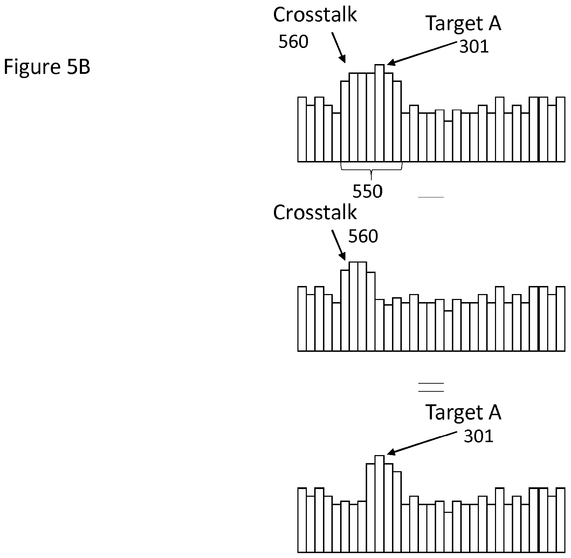

The cross-talk light path 504 adds a contribution which can be problematic if the target is close to the sensor. The effect on a histogram reflecting the example shown in Figure 5a is shown in Figure 5b where the histogram shows a 'single' pulse 550 with contributions from the crosstalk 560 and target A 301 reflections. In other words the pulses produced from the crosstalk 560 and target A 301 reflections merge requiring the operation of de-correlating the crosstalk from the secondary pulse 560 from the target reflection pulse 301. Furthermore the merging of pulses produces a false target detection at the mid-point of the crosstalk 560 and Target 301 pulse combination or some clipping will occur due to the increased overall pulse width.

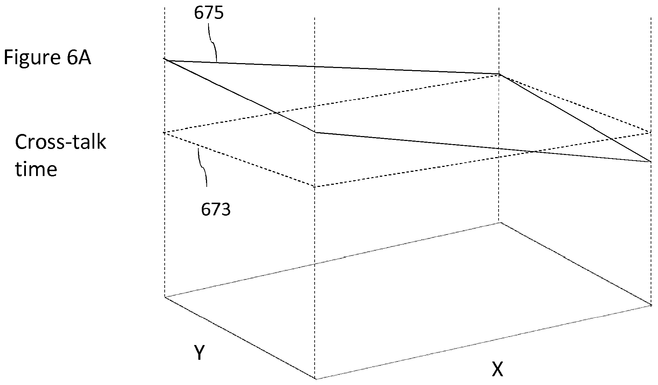

Furthermore although cross-talk is shown in Figures 5a and 5b as being a single point issue the cross-talk effect may differ across the whole of the sensor surface. For example as shown in Figure 6A the cross-talk component may not be the same across the x and y dimensions of the sensor as shown by the dashed plane 673. However as shown by the plane 675 in Figure 6A the function may be a linear or non-linear function.

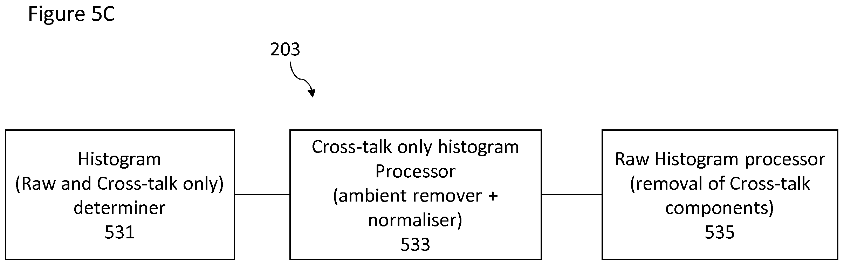

The concept of the cross-talk correction algorithm component is to capture, even when no target of significant intensity is present, at least one histogram which provides the location, shape and intensity of the cross-talk waveform (or other noise source waveform). A schematic view of an example cross-talk detector/extractor 203 according to some embodiments is shown in Figure 5C.

The cross-talk detector/extractor 203 may in some embodiments comprise a histogram determiner 531. The histogram determiner may be configured to receive or determine from the sensor a raw histogram. The raw histogram in some embodiments may be the output from the pile-up corrector and thus may already be partially processed to address the pile-up.

A single point of the sensor histogram 550 is shown by the top part of Figure 5B which comprises contributions from both the crosstalk 360 and the target 301.

Having determined or generated the raw histogram the cross-talk detector/extractor and the histogram determiner 531 may be configured to generate a further histogram comprising only the cross-talk components. This is shown in Figure 5B by the centre histogram comprising only the components which form the cross-talk 360.

The cross-talk only histogram could be captured in some embodiments during a device test with a cover glass present.

In some embodiments the cross-talk only histogram may be determined by employing a target 'detector' configured to determine whether there are no other major target objects obstructing the crosstalk histogram portion and then extracting the cross-talk component from the histogram. The target 'detector' algorithm may be based on temporal changes in pulse positions, pulse widths, differencing applications, intensity information, additional sensors outside of time-of-flight sensor etc.

In some embodiments the cross-talk only histogram is determined by detecting within the histogram data a portion of the histogram data which remains fixed in time and thus inferring the cross-talk only component of the histogram.

The cross-talk detector/extractor 203 may in some embodiments comprise a cross-talk only histogram processor 533. The cross-talk only histogram processor 533 may be configured to receive the cross-talk only histogram data and process this data.

For example in some embodiments having detected or determined the cross-talk only histogram the processor 533 may be configured to remove any ambient contribution (this may for example comprise a determined fixed value or DC level subtraction and an optional windowing out of the ambient noise) since the approximate crosstalk location can be known/determined.

The processor may furthermore in some embodiments be configured to process the cross-talk only histogram (with ambient levels removed) to normalise the histogram. For example in some embodiments the histogram count values are divided by the number of enabled SPADs to give a per SPAD histogram.

In some embodiments a reference range is also stored close to the point in time of the cross talk histogram acquisition.

In some embodiments the processor is configured to average the crosstalk only histogram from multiple range operations to reduce the effect of photon shot noise.

The cross-talk detector/extractor 203 may in some embodiments comprise a raw histogram processor 535. The raw histogram processor 535 may be configured to receive the raw histogram and the processed cross-talk only histogram from the histogram processor 531 and cross-talk only histogram processor 533 respectively and be configured to subtract or remove the processed crosstalk only contribution histogram from the raw histogram.

This may be achieved by multiplying the normalised cross-talk only histogram by the number of SPADs used to generate the raw histogram in order to produce a weighted cross-talk histogram.

In some embodiments an additional reference measurement is made and the weighted cross-talk histogram can be shifted by any difference in the current reference range from the reference range made at the point of crosstalk capture.

For example, if the reference range shifts by ¼ bin width to the right, meaning that the captured crosstalk histogram should also be shifted ¼ width to the right, then the processor shifts ¼ of each bin's content into the bin to the right. For an integer shift, simply shift the full weighted crosstalk histogram to the right by an integer number of bins.

Then in some embodiments the weighted cross-talk only histogram is subtracted from the raw histogram to give a corrected histogram. The subtraction can be shown in Figure 5B by the lower part which shows the target only 301 contribution.

In some embodiments the raw histogram processor 535 is configured to over correct for the cross-talk both in intensity and by making the subtracted component wider (in other words perform the cross-talk subtraction over more histogram bins). The over-correction may be performed in order to allow for the cross-talk pulse intensity/shape/position to shift over variations in process, voltage, temperature (PVT) and thus prevent the correction subtraction from being fully effective in removing all of the cross-talk pulse and thus enabling the detection and parameter determination algorithms detecting a false target. This scheme can also help to account for changes in the level of crosstalk received due to changes in the optical transmission / reflectance of materials, for example rain or smudges on coverglass.

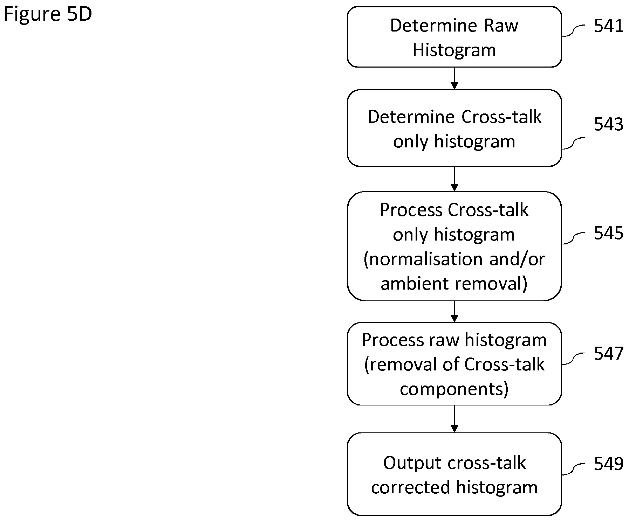

In other words the operation of the cross-talk detection may be summarised by firstly determining a raw histogram such as described in Figure 5D by step 541.

Then the cross-talk detection operation may determine a cross-talk only histogram. The determination of the cross-talk only histogram is shown in Figure 5D by step 543.

The cross-talk only histogram may then be processed. For example to remove ambient contributions and to normalise the histogram for a determined SPAD reference number. The processing of the cross-talk only histogram is shown in Figure 5D by step 545.

The raw histogram may then be processed to remove the cross-talk components by using the processed cross-talk only histogram data. The operation of processing the raw histogram data is shown in Figure 5D by step 547.

The cross-talk corrected histogram may then be output. The outputting of the cross-talk corrected histogram is shown in Figure 5D by step 549.

As indicated above in some embodiments the cross-talk correction is implemented as a function across the sensor. In other words as the cross-talk is a function in (x,y) SPAD position on the sensor and the histogram bin (bin) and may be defined as:

$$xtalk = f(bin, x, y)$$

As such in some embodiments the cross-talk correction is performed by plane fitting to the determined cross-talk for at least some positional samples. Thus in some embodiments rather than a single cross talk histogram determination a minimum of three quadrants or (spatial) regions of interests are processed as above to determine cross-talk histograms and then a spatial cross-talk model is generated such that the cross-talk may be defined as:

$$xtalk = x \times \left(\frac{\partial xtalk}{\partial x}\right) + y \times \left(\frac{\partial xtalk}{\partial y}\right) + xtalk\_offset$$

Where $\frac{\partial xtalk}{\partial x}$ = xtalk gradient in x, $\frac{\partial xtalk}{\partial y}$ = xtalk gradient in y,

and *xtalk-offset* = xtalk dc offset.

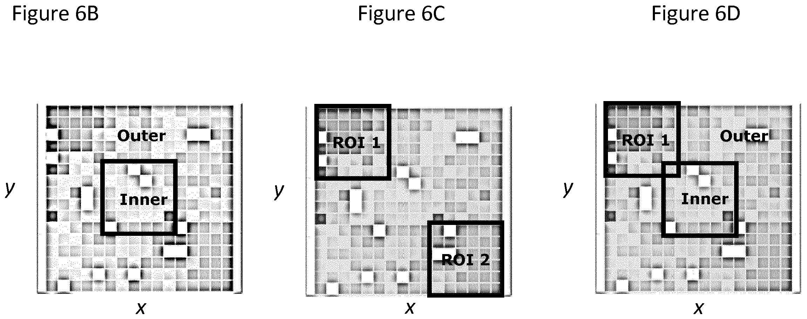

In some embodiments rather than defining a model for cross-talk over the whole of the sensor, regions of interest are modelled separately. Thus for example, such as shown in Figure 6B, in some embodiments an inner or central region and an outer surrounding region may be modelled separately as

$$xtalk_{MM_{inner}}(bin) = \sum_{inner \cap DSS} f(bin, x, y)$$

$$xtalk_{MM_{outer}}(bin) = \sum_{outer \cap DSS} f(bin, x, y)$$

In some embodiments for example, such as shown in Figure 6C, in some embodiments a first region of interest ROI 1 and second region of interest ROI 2 are modelled separately as

$$xtalk_1(bin) = \sum_{ROI1 \cap DSS} f(bin, x, y)$$

$$xtalk_2(bin) = \sum_{ROI2 \cap DSS} f(bin, x, y)$$

In some embodiments for example, such as shown in Figure 6D, in some embodiments a first outer region of interest ROI 1 and second inner region of interest, Inner, are modelled separately as

$$xtalk_{inner_{ROI1}}(bin) = \sum_{inner \cap ROI1 \cap DSS} f(bin, x, y)$$

$$xtalk_{outer_{ROI1}}(bin) = \sum_{outer \cap ROI1 \cap DSS} f(bin, x, y)$$

Existing methods for processing the histogram attempt to detect the histogram peak in order to then extract parameters such as the time associated with the peak and thus from the time determine the distance between the sensor and the object. However current histogram pulse detection and parameter extraction or determination methods have associated problems.

For example an example histogram with an earlier or first target peak and a later or second target peak may be analysed by finding the maximum bin value(s) within a histogram to determine pulse locations. This approach however limits the range resolution to the resolution of a histogram bin width. Thus for high accuracy results the sampling rate must be high. Having a high sampling rate impacts on the silicon area used and power consumption for the device. Furthermore for precise timing the scheme requires a very narrow pulse width high powered optical output. This can be difficult to achieve if mm-resolution is required.

An improvement to the peak detection method which has been implemented is a two-bin with additional window to capture ambient count values. An example of the two-bin scheme may be where two bin values from the histogram, which may be defined as Bin A and Bin B are selected. Furthermore from these bin values an ambient contribution is subtracted. The ratio between the Bin A and Bin B values can then define the range based on the light signal pulse width. For example the range parameter may be defined as

Range_output=(Bin B – Bin A) * pulse_width/(2*total_counts)

However this scheme is not satisfactory since it assumes that the light pulse is perfectly square and furthermore requires precise knowledge of the optical pulse shape and thus does not take into account other elements of the system which may distort the pulse shape, including jitter and sampling inaccuracies.

A further scheme which has been implemented to extract parameters from a determined peak within a histogram data set is determining a centre of mass within a determined peak series of histogram bins. In such methods the ambient contribution is subtracted from the bin values and then a centre of mass calculation is performed around a pulse of interest. This method is problematic since it requires a reasonably high OSR (Over Sampling Ratio) to ensure range linearity. It is furthermore problematic as it requires a uniform pulse shape well matched to a multiple of bin widths. If this is not met then range error (or a Differential Non-Linearity error) will result since the mean based calculation makes an assumption that all events within a bin are weighted around the centre of that bin. Also events occurring at the extreme points of any window of interest will have more impact on the mean than values occurring close to the mean of the distribution. This has the impact that noise from ambient results in a higher overall ranging noise.

As discussed previously after generating the corrected (for example with respect to pile-up and/or cross-talk) histogram data a range calculation can be performed on the data by a two stage process of identifying a suitable pulse or bins and then from these identified pulses determining parameters such as range from them.

In the following embodiments this range extraction scheme may be based on assessment of counts received on histogram bins around a determined median bin location.

To ensure no non-linearity issues, the scheme relies on the sampled signal having a shape with an even distribution for one quantisation step either side of the pulse median.

The scheme described herein is one where the histogram data is fundamentally not continuous but is built from a probability distribution function from multiple (typically 1000's) of events built up over an integration period.

The parameter extraction methodology in the following embodiments can thus be considered to comprise four steps, the first associated with median event detection and the second to the fourth associated with parameter extraction.

Firstly pulse detection. In this step the goal is to determine the position of the two sample points around the median event, as well as the pulse width to enable filter widths to be tuned for the extraction phase. Around detected pulses the histogram output is padded with ambient level only.

Secondly parameter range calculation. In this step the goal is to compare count ratios to ascertain the precise position of the median event within the constraints of shot noise.

Thirdly parameter noise estimation. In this step the goal is to directly use the histogram data to estimate the noise associated with the ranging measurement.

Fourthly is parameter maximum distance (DMAX) estimation. In this step the goal is to calculate the maximum distance which it would be possible to detect, assuming a specific reflectance value, and assuming the target occupies the full field of view.

Two implementation methods for pulse weighted histogram extraction are described hereafter. It would be understood that in some embodiments although the methods described as 'method A' and 'method B' show a specific set or steps or operations to obtain the parameters that in some embodiments further hybrid methods may be formed by selecting parts of each of 'method A' and 'method B' and combining these parts.

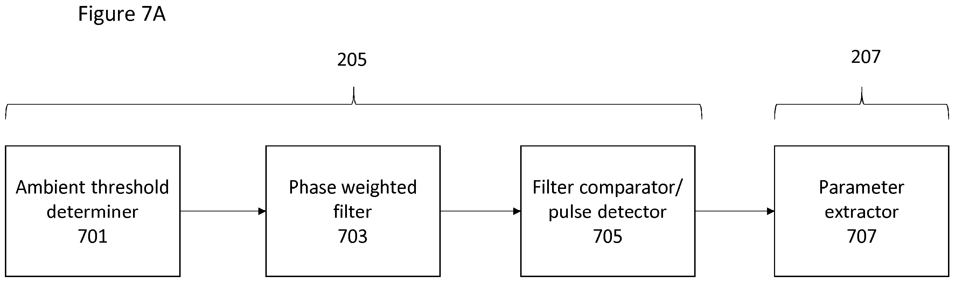

With respect to Figure 7A an example pulse detector 205 and parameter extractor 207 suitable for implementing the 'method A' operations is shown.

In some embodiments the pulse detector comprises an ambient threshold determiner 701. The ambient threshold determiner may be configured to receive the output of the cross-talk detector 203 (or the pile-up corrector 201) and be configured to determine an estimate of the ambient light and furthermore identify histogram areas of interest relative to the ambient light values.

In some embodiments the output of the ambient threshold determiner 701 can be passed to the phase weighted filter 703 as well as the processed histogram data.

In some embodiments the pulse detector furthermore comprises a phase weighted filter 703. The phase weighted filter 703 is configured to analyse the histogram data and the determined areas of interest to generate filter outputs which are further analysed within the filter comparator/pulse detector 705. Although this example shows an ambient threshold determiner 701 followed by a phase weighted filter 703 it is understood that the order of the operations may be reversed or both are performed in parallel and the results of each are passed to the filter comparator 705.

The output of the phase weighted filter 703 may be passed to the filter comparator/pulse detector 705 where the result of the phase weighted filter is compared against criteria to identify whether the area of interest of the histogram is part of a detected signal pulse. These results and the histogram data may be passed to a parameter extractor 707 where the range/max range/noise parameters may be determined for each detected pulse.

In some embodiments the phase weighted filter 703 is an edge detecting filter configured to detect points of rising and falling edges.

Thus for example the phase weighted filter may be a +/- filter e.g. {+1,+1,+1+1,-1,-1,-1,-1} - The number of +1 and -1 is controlled by the filter width of interest size the filter width of interest size may be determined relative to the VCSEL pulse width. For example in some embodiments

$$\text{+/- PW width = 1+2xCEILING(light-source pulse width/2) phase clocks.}$$

In such a system the filter comparator/pulse detector 705 may be configured to compare the result of the phase weighted filter to identify a significant rising or falling edge. For example a significant negative output indicates a rising edge and significant positive output indicates a falling edge. In such embodiments having determined a rising and falling edge the filter comparator/pulse detector 705 may be configured to filter the histogram data to output a 'pulse' comprising the histogram values between the rising and falling edge bins and padding the histogram bins outside of the rising and falling edge with zero values.

Each 'pulse' histogram may then be analysed according to any of the following parameter extraction methods to determine suitable parameter values.

In some embodiments the ambient threshold determiner 701 furthermore is implemented by determining a minimum magnitude change in the filtered data and indicating that a detected rising and falling edge is a valid pulse when the minimum magnitude change is passed.

In some embodiments a parameter extractor may be configured to receive the pulse histogram values and furthermore the phase weighted filter values and from the phase weighted filter values detect a positive zero crossing in the filtered output. At each valid positive zero crossing the parameter extractor may use linear interpolation to generate the phase value which may then be used to determine the median of the pulse and thus from this determine the range value.

In some embodiments the ambient threshold determiner 701 comprises a detection window filter configured to sum the bins within a detection window length. The detection window length in some embodiments is defined by the size of the signal pulse and furthermore related (and may be less than or equal) to the phase width filter width. The detection window filter may be applied for all of the possible window positions within the bins. For example if there are 256 bins then there are 256 detection windows.

For each detection window filter a sum of the detection events is calculated.

Then for each window position an ambient thresholding operation is performed where the possible detected location is indicated where the sum is greater than a threshold value greater than the ambient detection value. For example in some embodiments the detection indicator or flag is generated when

$$\text{sum>[det\_win\_size*amb\_per\_bin+thresh\_sigma*sqrt(det\_win\_size*amb\_per\_bin)]},$$

where amb_per_bin is the ambient detection value per phase clock, and a good threshold value thresh_sigma is >=5 to account for noise from ambient events in the detection and ambient windows. The level of this threshold determines the likelihood of a false target being detected due only to ambient noise. A high threshold setting can prevent detection of an actual returned pulse with too low an intensity.

In some embodiments the phase weighted filter 703 is an 'ABC' window. The phase weighted histogram window width may be determined based on the light source pulse width with respect to the quantization/bin size. This width may be established from the input control to the light source, or from a pulse width established during the detection phase. Thus for example in some embodiments the window size in bin widths, where one bin width is the difference between two neighbouring sampling phases, can be determined as

$$\text{ABC PW width } = 1+2\text{xCEILING(light-source pulse width/2) phase clocks.}$$

So where the light source pulse width is 4.xx phase clocks wide then the ABC PW window width is 7 phase clocks wide and furthermore the detection window width may be 5 phase clocks wide. Furthermore in such an example the ABC filter PW window may comprises a first A part two bins wide, a second B part which is one bin wide, and a third C part which is two bins wide.

In some embodiments the phase weighted filter 703 is furthermore configured to determine differences for every filter position to determine the phases (bin edges) preceding and following the pulse median. The differences may be calculated from the A, B and C parts and a determined ambient event level value according to the following:

$$\text{Difference X = DX = (A+B)−(C+amb)}$$

$$\text{Difference Y = DY = (B+C)−(A+amb)}$$

In some embodiments these values A, B, C, X, Y and amb may be passed to the filter comparator/pulse detector 705.

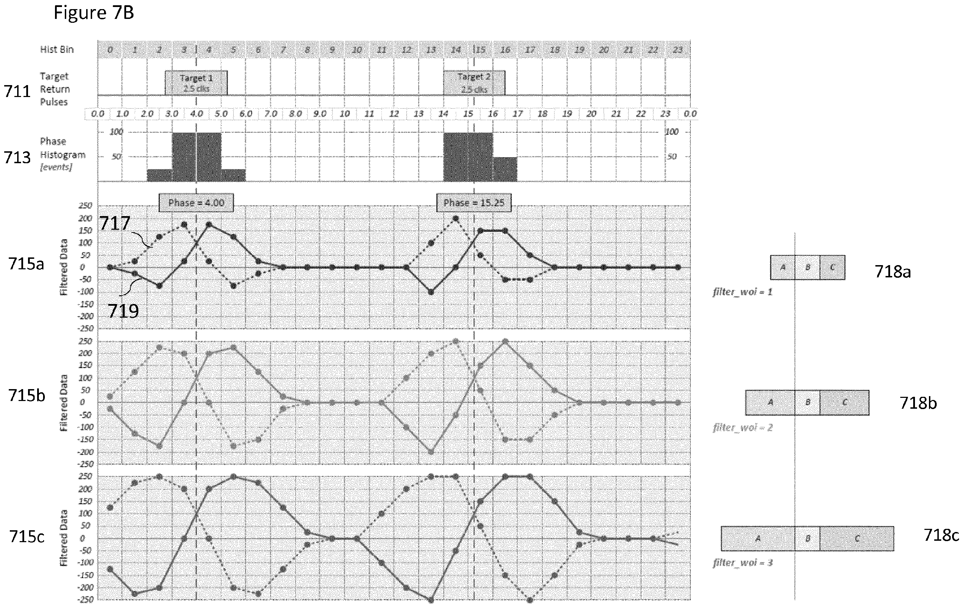

With respect to Figure 7B is shown a series of simulated examples of the application of ABC filters 718. A first example filter 718a has a window of interest =1 and produces a phase output 715a showing DX 719 and DY 717 plots. A second example filter 718b has a window of interest =2 and produces a phase output 715b showing DX and DY plots. A third example filter 718c has a window of interest =3 and produces a phase output 715c showing DX and DY plots.

The filter comparator/pulse detector 705 may in some embodiments use the A, B, C, DX, DY and amb values and from these determine a median bin.

For example in some embodiments where DX and DY are both greater than zero then a median pulse bin has potentially been detected and this is indicated.

In some embodiments if DX=0 and DY=0 then no pulse has been detected. Furthermore in some embodiments to avoid missing pulses centred in the B phase then if DX < 0 and DY > 0 and for the next phase DX> 0 and DY< 0 then a pulse is detected. Similarly in some embodiments a pulse is detected when a value of DY is OR-ed with the NOT(DX) value of the following phase.

In some embodiments where the previous phase bin position has been flagged as a potential pulse then the current phase bin position is 'blocked' to avoid incorrect double pulse outputs around the same position.

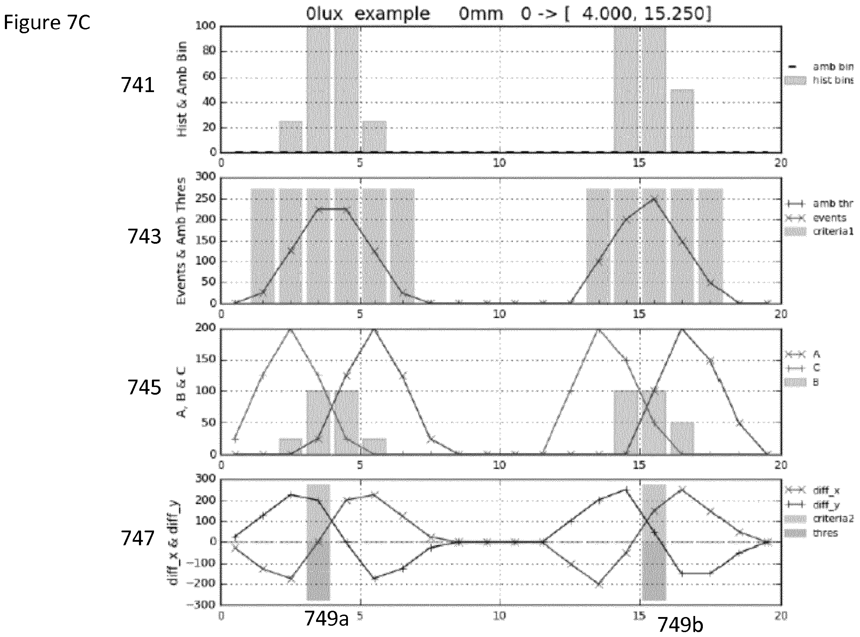

Figure 7C shows a similar example to that shown in Figure 7B. Figure 7C thus shows a plot 741 of example histogram bins (having been scaled for ambient bin events), plot 743 shows the output of the (ambient) detection stage where the ambient criteria are met for some of the histogram bins, plot 745 shows the A, B, C values associated with the histogram data, and plot 747 the DX, DY values and the PW transition criteria detection which result in the median bin detection outputs 749a and 749b.

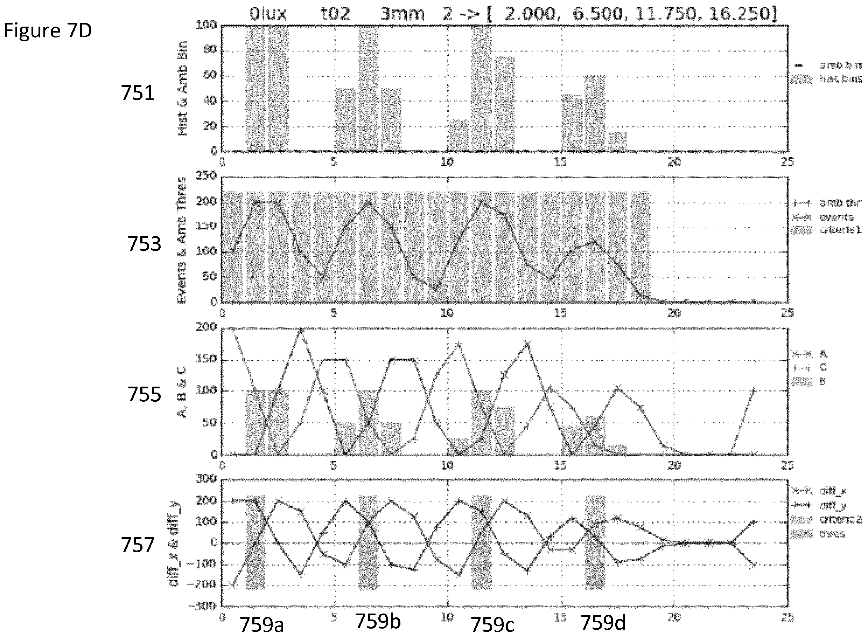

Figure 7D shows a further example where plot 751 shows example histogram bins (having been scaled for ambient bin events), plot 753 shows the output of the (ambient) detection stage, plot 755 the A, B, C values, and plot 757 the DX, DY values and bins where the PW transition criteria are met which result in the median bin detection outputs 759a, 759b, 759c and 759d.

The filter comparator/pulse detector 705 having determined the positions of return event pulses where both the ambient thresholding and PW transition criteria give positive outputs and one or more bin phase positions are determined then these values may be passed to the parameter extractor 707 to determine parameters based on these values.

For example in some embodiments the parameter extractor 707 is configured to determine a range calculation based on the determined median bin values. Thus in some embodiments the parameter extractor 707 may be configured to calculate or determine the median phase from the A, B, C, and ambient values of the PW window for the determined median phase position using the following

$$\text{Median Phase} = \frac{1}{2} + \frac{C-A}{2(B-amb)}$$

Having determined the median phase and knowing the bin location thus enables a range estimate to be generated associated with that determined pulse.

The filter comparator/pulse detector 705 may in some embodiments having determined the median position perform a calculation to estimate the noise associated with the measurement. In some embodiments the numerator shot noise effect on the range determination may be estimated as:

$$\text{Noise}_{\text{numerator}} = \frac{\sqrt{C+A}}{2(B-amb)}$$

and the denominator shot noise effect on the range may be determined as

$$\text{Noise}_{\text{denominator}} = \left| \frac{C-A}{2(B-amb-\sqrt{(B+amb)})} - \frac{C-A}{2(B-amb)} \right|$$

The denominator noise contribution goes to zero when pulse is balanced between A and C and is modulated with pulse position. The range noise shape is non-Gaussian due to denominator noise effect, especially for received low counts. The standard deviation estimation may in some embodiments be taken from subtraction of sqrt(B) so any error over-estimates noise.

The total or combined shot noise may thus be estimated as

$$\text{Noise}_{combined} = \sqrt{Noise^2_{Numerator} + Noise^2_{Denominator}}$$

In some embodiments the noise for the determined range may be determined as

$$\sigma_{phase} = \sqrt{\left(\frac{C + A}{4 \times (B - amb)^2}\right) + \left(\frac{(C - A)^2 \times (B + amb)}{4 \times (B - amb)^4}\right)}$$

In the embodiments where cross-talk subtraction or filtering occurs it is necessary to account for this subtraction in both the range and noise estimation calculations. For the range calculation, the crosstalk contribution estimation associated with parts A, B, C is subtracted. Contributions are denoted in the formula below by the 'x' subscript. As discussed previously these crosstalk contributions could be taken from fixed calibration at test, or from a scheme where these values are calculated or adjusted on the fly.

$$phase = \frac{(C - C_x) - (A - A_x)}{2(B - B_x - amb)}$$

from the crosstalk compensation algorithm stage. Although the crosstalk subtraction algorithm removes the DC level of the crosstalk, it is important to recognise that the photon shot noise from the crosstalk contribution will remain, and therefore must be accounted for if we are to accurately predict the noise of the ranging measurement. To account for this, the cross-talk based noise calculation can be adjusted as shown below.

$$\sigma_{phase} = \sqrt{\left(\frac{C + C_x + A + A_x}{4 \times (B - B_x - amb)^2}\right) + \left(\frac{(C - C_x - (A - A_x))^2 \times (B + B_x + amb)}{4 \times (B - B_x - amb)^4}\right)}$$

The filter comparator/pulse detector 705 may in some embodiments from the data described above determine a maximum distance (Dmax) which could have been resolved had a target been present. This is useful since the system is effectively blind to targets beyond this maximum distance due to ambient noise in the system.

Thus for example using values such as a distance at which a Dmax calibration is taken defined by Dcal, a signal value in events/bin generated from a 100% target at the Dmax calibration distance (thus for example if a 17% target was used for calibration then this may be scaled by a ratio of reflectance - thus 100/17) defined as Signal@Dcal, a value of reflectance of target used for signal calibration defined as Ref@Dcal, a desired reflectance that Dmax is to be calculated for defined as Ref, the ambient count defined as Ambient, the signal confidence (in other words 94% valid ranges implies 2 sigma) defined as SConf, and an ambient noise floor aligned with the histogram processing assumption (i.e. a value of 6 implies that the signal in a bin must be > ambient + 6 standard deviations to be considered valid) defined as Aconf, then a maximum distance defined as Dmax may be calculated by:

Where

$$Dmax = Part\ A\ / Part\ B$$

$$Part\ A = Dcal \times 2 \times Signal@Dcal \times \frac{Ref}{Ref@Dcal}$$

and

$$Part\ B = Sconf \times \sqrt{Signal@Dcal \times \frac{Ref}{Ref@Dcal}}$$

$$\pm \sqrt{\left(Sconf^2 \times Signal@Dcal \times \frac{Ref}{Ref@Dcal}\right) + \left(4 \times Signal@Dcal \times \frac{Ref}{Ref@Dcal} \times \left(\left(Aconf \times \sqrt{Ambient}\right)\right)\right)}$$

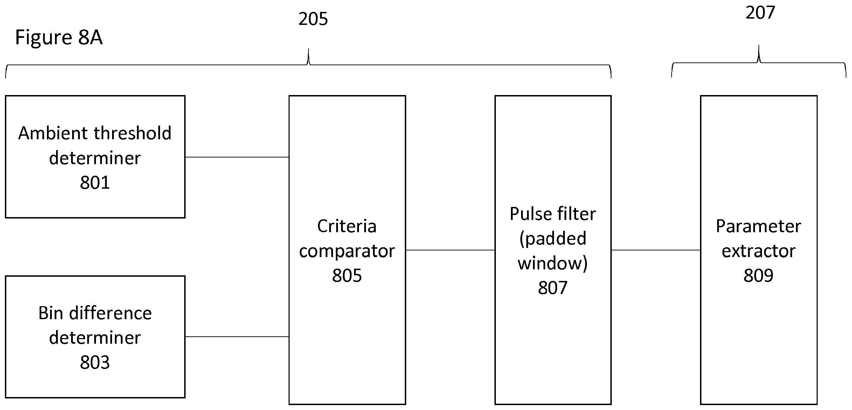

With respect to Figure 8A an example pulse detector 205 and parameter extractor 207 suitable for implementing the 'method B' operations is shown.

In some embodiments the pulse detector comprises an ambient threshold determiner 801. The ambient threshold determiner may be configured to receive the output of the cross-talk detector 203 (or the pile-up corrector 201) and be configured to determine an estimate of the ambient light and furthermore identify histogram areas of interest relative to the ambient light values. In some embodiments the output of the ambient threshold determiner 801 can be passed to the criteria comparator 805. In some embodiments an estimate of ambient noise per bin value may be performed by applying an 'ambient window'. The term 'ambient window' represents a time when the received signal is accumulated no optical output made from the device: the name is due to the signal received being from ambient light. Dark signal from the photodetector will also be accumulated during this period: this can be considered in the same way as ambient light. Typically the time allocated to the ambient window may equate to the time allocated to 8 bins of the full histogram, in order to minimise the effect of shot noise in the window. While a perfectly accurate mean would require an infinite number of samples, the ambient window can provide an estimate with sufficient accuracy to prevent error.

For a system where the noise performance is dominated by the photon shot noise of events falling in a given window, the standard deviation of the noise can be estimated by the square root of the mean number of events. This noise estimate can be multiplied by factor to reduce the likelihood of false targets being detected by the system. One example is to multiply this noise estimation by 6. This ambient noise threshold seeks to account for noise both in the ambient window itself and noise from the captured histogram. This threshold may then be applied to the bin difference values to determine pulses.

In other words if we define sigma as the Photon Shot noise = sqrt(events), then sqrt(ambient_events_per_bin) = ambient sigma. Thus an equation for ambient thresholding may be defined as

Ambient threshold = ambient_events_per_bin + sqrt(ambient_events_per_bin) * sigma_thres

For example where ambient_events_per_bin = 50 and the ambient shot noise (sigma) = sqrt(50) = 7.07 and sigma_thres = 6.0, then
ambient thresh = 50 + 7.0 * 7.07 = 99 events.

In some embodiments the pulse detector furthermore comprises a bin difference determiner 803. The bin difference determiner 803 is configured to analyse the histogram data to generate outputs which are further analysed by the criteria comparator 805. This for example may be performed by generating a value for each bin which is the bin count minus the previous bin value. In some embodiments the difference value may be rolling window of +/- n bins.

The output of the bin difference determiner 803 may be passed to the criteria comparator 805.

In some embodiments the pulse determiner comprises a criteria comparator 805 where the results of the bin difference determiner 803 and the ambient threshold determiner 801 is analysed to identify whether the area of interest of the histogram is part of a detected signal pulse. In some embodiments the criteria comparator 805 is configured to determine the start, centre and end bins of potential pulses based on comparing the bin difference and ambient threshold values. The criterial may pass these values and the histogram data to a pulse filter 807.

In some embodiments the pulse determiner comprises a pulse filter 807 configured to filter the histogram data based on the output from the criteria comparator 805. Thus in some embodiments for each potential pulse start and end position a pulse window may be generated and the histogram bins filtered using this pulse window filter. In some embodiments the bins outside of the pulse window are padded by a determined ambient value. Furthermore in some embodiments based on the knowledge of the VCSEL pulse width then parameter estimation window(s) within each detection window may be generated. The output of the pulse filter 807 may be passed to a parameter extractor 807.

The parameter extractor 807 may then be configured to determine the parameters associated with the filtered pulse value (for example determine the range/max range/noise parameters using the parameter estimation window(s) within each pulse window).

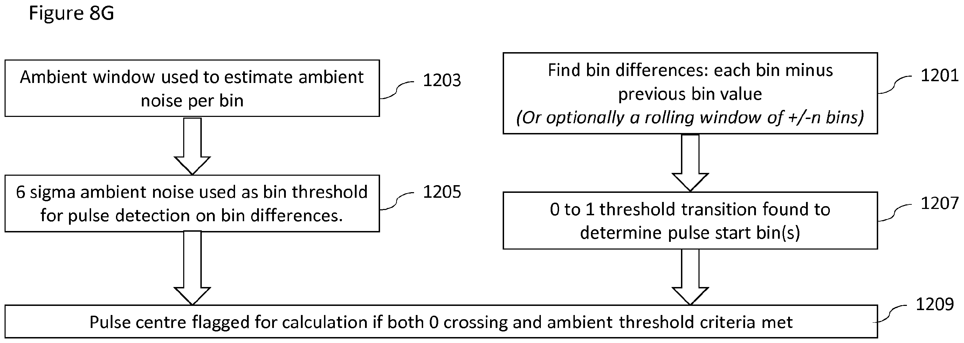

With respect to Figure 8G an example flow diagram showing the operation of the apparatus shown in Figure 8A according to some embodiments is shown.

In some embodiments an ambient window is used to estimate ambient noise per bin. The operation of using an ambient window used to estimate ambient noise per bin is shown in Figure 8G step 1203.

Having determined the ambient noise per bin a bin threshold for pulse detection is determined, for example using the 6 sigma ambient noise value. The operation of determining a bin threshold for pulse detection using the 6 sigma ambient noise value is shown in Figure 8G by step 1205.

Furthermore bin differences are determined, for example by using each bin minus previous bin value (Or optionally a rolling window of +/-n bins). The operation of determining bin differences for example by using each bin minus previous bin value is shown in Figure 8G by step 1201.

Having determined bin differences the positive edge may be indicated by determining positive bin differences.

Furthermore in some embodiments having determined the bin differences potential pulse start bins may be indicated. In some embodiments these are further filtered by bin differences being positive and being above the ambient noise value.

The operation of determining pulse start positions is shown in Figure 8G by step 1207

Furthermore the pulse centre may be flagged for calculation if both zero crossing and ambient criteria are met. The operation of flagging the pulse centre for calculation if both zero crossing and ambient criteria are met is shown in Figure 8G by step 1209.

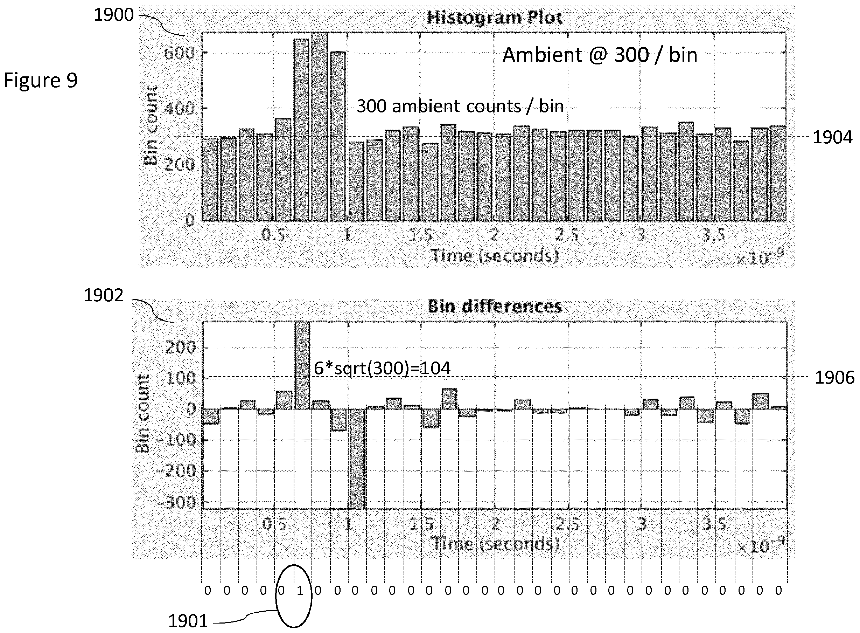

With respect to Figure 9 an example of the application of the method shown in Figure 8G is described in further detail. In the top part of Figure 9 is shown a histogram plot 1900 showing bin counts. From these bin counts a bin difference value may be calculated and plotted 1902 as shown in the bottom part of Figure 9.

The ambient count per bin may furthermore be determined as shown in the top part of Figure 9 by the horizontal dashed line 1904 at 300 ambient counts per bin. The 6 sigma value of the ambient count per bin (i.e. 6*sqrt(ambient)) may be determined and is shown in the bottom part of Figure 9 as dashed line 1906 at 104 counts.

Where the bin difference value is greater than the ambient threshold value then the start bin of the pulse has been determined. This is shown in the bottom part of Figure 9 wherein a bit sequence 1901 is shown where each bin has an associated bit value which is 1 when the bin difference value is greater than the threshold value of 104 and 0 otherwise.

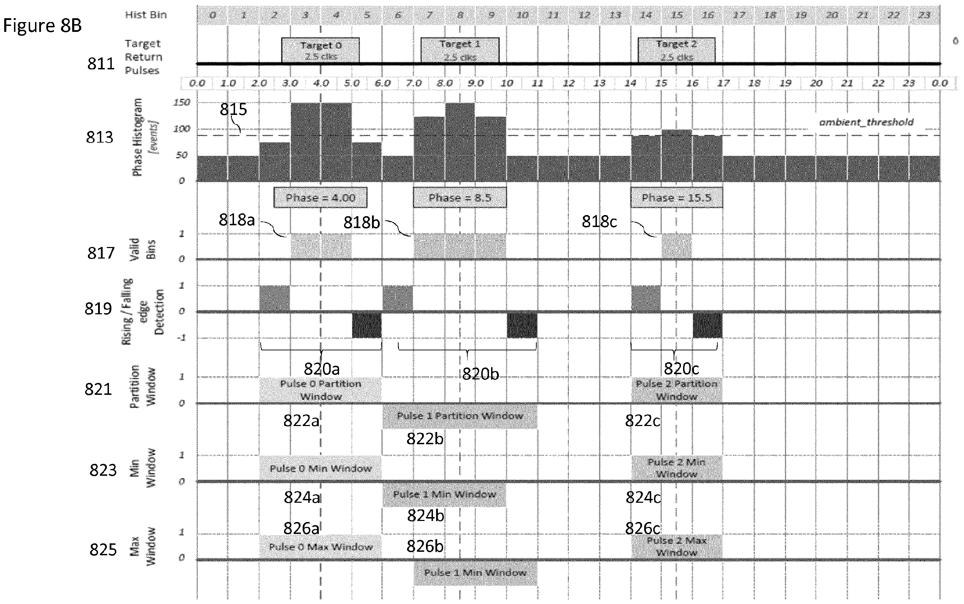

In some embodiments rather than applying the ambient threshold to the bin difference the ambient threshold is used to determine a potential pulse start position against the bin values. For example Figure 8B shows a simulated three object example and the operation of the second example pulse detector where the ambient threshold is applied to the bin value to determine an initial pulse candidate. In this example there is shown a first plot 811 which shows the target return pulses. Furthermore is shown a plot of the phase histogram 813 and the determined ambient threshold 815. Figure 8B furthermore shows a threshold valid bin determination plot 817 on which is shown the detection of bins which meet the ambient criteria shown as bin pulses 818a, 818b, and 818c. These ambient criteria valid plots may furthermore be extended by a bin either side as shown in rising/falling edge plot 819 showing the extended pulse detection windows 820a, 820b, and 820c. The thresholded data thus provides an initial estimate of pulses widths with the caveat that the ambient filtering can miss some of the lower pulse bin values. This is why in some embodiments the detected pulse width is expanded by 1 bin on each side which allows the width of the pulse to be crudely estimated and an extended pulse identified.

Additionally shown in Figure 8B is the partition window plot 821 showing partitions 822a, 822b, and 822c. The partition windows furthermore may be split into min window plots 823 (showing min windows 824a, 824b, and 824c) and max window plots 825 (showing max windows 826a, 826b, and 826c). Having expanded the detected pulse widths by 1 in each direction to ensure that the pulse is fully enclosed by the partition window the partition window width defines the filter half width for the range extraction. In some embodiments it may be required to set a lower bound on the pulse partition window width. The min window which is the first 4 bins of the partition window (3 if partition window < 4) is used to estimate the min phase/range of the pulse and the last 4 bins of the partition window (3 if partition window < 4) may be used to estimate the max phase/range of the pulse.

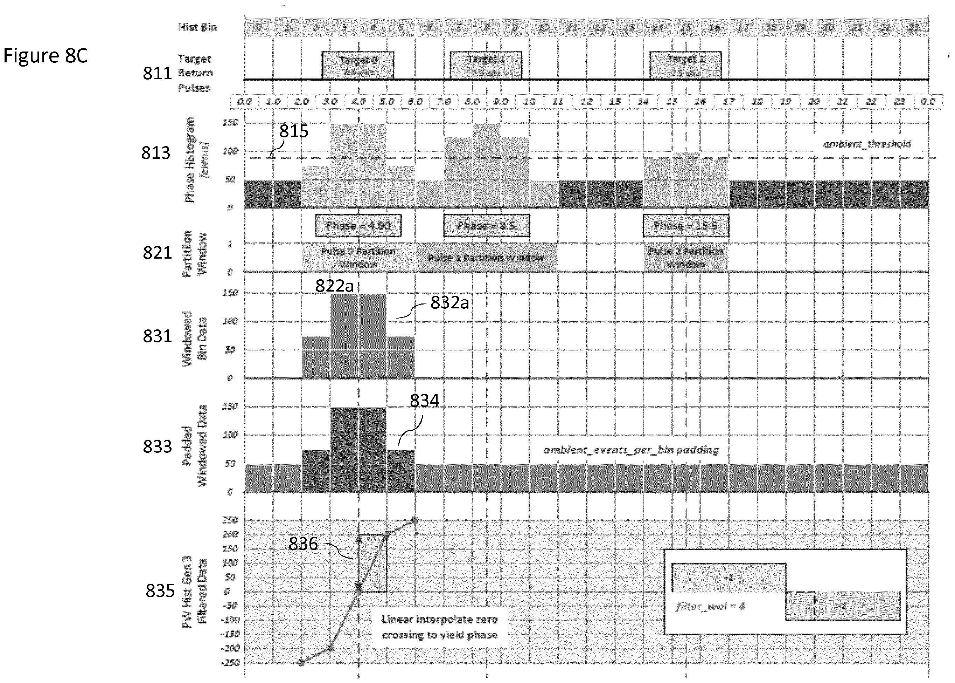

Figure 8C shows an example pulse filtering such as performed by a pulse filter 807 in some embodiments. The pulse filter may be configured to filter the histogram data based on the output from the criteria comparator 805. Figure 8C shows the plot 811 which shows the target return pulses, the phase histogram 813 plot and the determined ambient threshold 815, and partition window plot 821 showing partition 822a.

As can be shown in Figure 8C the pulse filter may be configured to apply the partition window 822a to the histogram phase plot 813 to generate the windowed plot 831 showing the pulse 832a. Furthermore the pulse filter may pad the remainder of the histograms with the ambient events per bin padding value. This is shown in Figure 8C by plot 833 which shows the pulse 834 surrounded by the padding values. Figure 8C furthermore shows an example linear interpolation method for determining the range phase value which may be implemented by using the min/max windows as shown in Figure 8B.

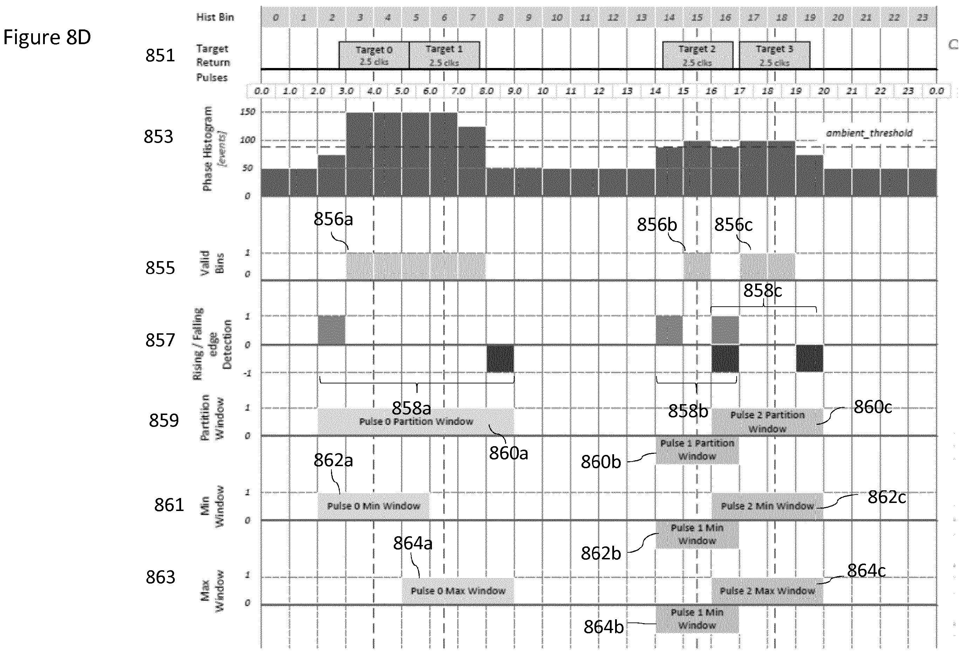

Figure 8D shows a further example of the operation of the second pulse detector. In this example there is shown a first plot 851 which shows four target return pulses. Furthermore is shown a plot of the phase histogram 853 and the determined ambient threshold. Figure 8D furthermore shows a threshold valid bin determination plot 855 on which is shown the detection of pulses 856a (which is actually the detection of 2 close pulse returns), 856b, and 856c. These ambient valid plots may furthermore be extended by a bin either side as shown in rising/falling edge plot 857 showing the extended pulse detection windows 858a, 858b, and 858c. Additionally is shown the partition window plot 859 showing partitions 860a, 860b, and 860c. The partition windows furthermore may be split into min window plots 861 (showing min windows 862a, 862b, and 862c) and max window plots 863 (showing max windows 864a, 864b, and 864c). As can be seen by applying the min and max windows (where there is knowledge of the actual pulse length) the range associated with the two target pulses may be extracted using the min and max window plots applied to the partition window filtering of the histogram bins.

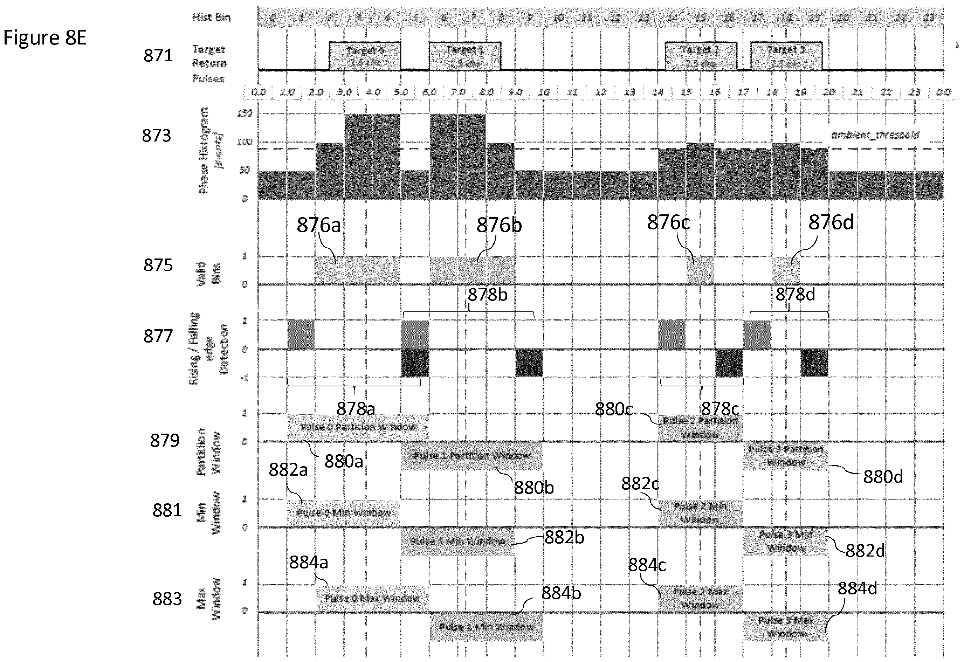

Figure 8E shows another example of the operation of the second pulse detector. In this example there is shown a first plot 871 which shows four target return pulses. Furthermore is shown a plot of the phase histogram 873 and the determined ambient threshold. Figure 8E furthermore shows a threshold valid bin determination plot 875 on which is shown the detection of pulses 876a, 876b, 876c, and 876d. These ambient valid plots may furthermore be extended by a bin either side as shown in rising/falling edge plot 877 showing the extended pulse detection windows 878a, 878b, 878c and 878d. Additionally is shown the partition window plot 879 showing partitions 880a, 880b, 880c and 880d. The partition windows furthermore may be split into min window plots 881 (showing min windows 882a, 882b, 882c and 882d) and max window plots 883 (showing max windows 884a, 884b, 884c and 884d).

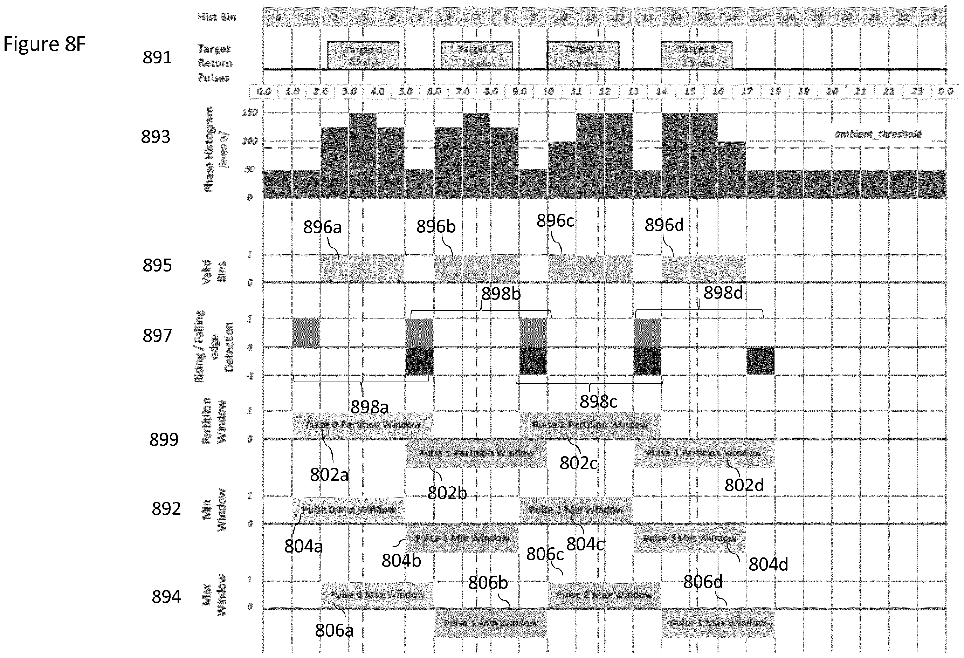

Figure 8F shows another example of the operation of the second pulse detector. In this example there is shown a first plot 891 which shows four target return pulses. Furthermore is shown a plot of the phase histogram 893 and the determined ambient threshold. Figure 8F furthermore shows a threshold valid bin determination plot 895 on which is shown the detection of pulses 896a, 896b, 896c, and 896d. These ambient valid plots may furthermore be extended by a bin either side as shown in rising/falling edge plot 897 showing the extended pulse detection windows 898a, 898b, 898c and 898d. Additionally is shown the partition window plot 899 showing partitions 802a, 802b, 802c and 802d. The partition windows furthermore may be split into min window plots 892 (showing min windows 804a, 804b, 804c and 804d) and max window plots 894 (showing max windows 806a, 806b, 806c and 806d).

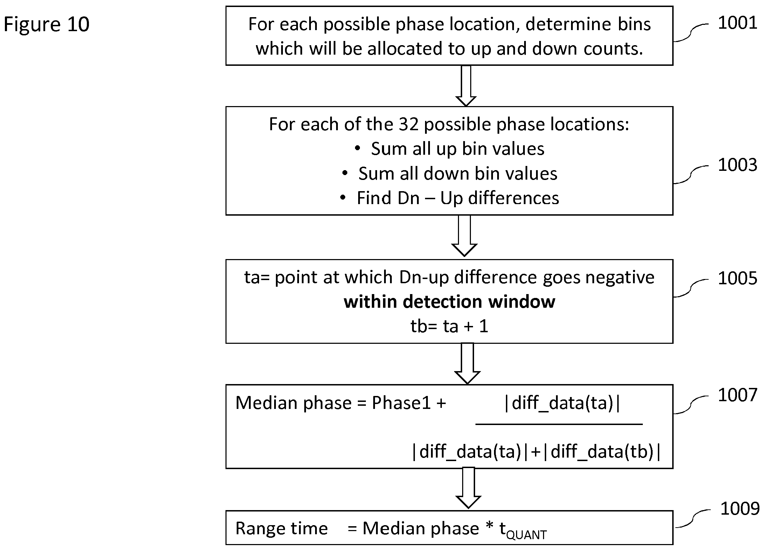

With respect to Figure 10 an example flow diagram showing the operation of determining a range value within the parameter extractor following the detection and filtering operations described above is shown.

As has been described above for each possible phase location an allocation of up and down bins is made in order to calculate bin differences.

The operation of generating the allocation of up and down bins for each possible phase location is shown in Figure 10 by step 1001.

Having determined the detection windows (the up and down bins) then for each of the possible phase locations (in this example 32 bins within the histogram) the up bin values are summed, the down bin values are summed and then the bin difference (down sum-up sum difference) is determined.

The operation of determining the down sum-up sum difference (which may be defined as the value diff_data) for each of the possible phase locations is shown in Figure 10 by step 1003.

Having determined the bin difference values the point at which the difference goes negative is determined (and may be defined as bin ta) furthermore the next bin phase (defined as tb) is also identified.

The identification of the bin phases where the difference goes negative (and the succeeding bin) is shown in Figure 10 by step 1005.

The median phase value may then be determined based on the detected start bin defined as phase 1 (the value of phase 1 may be determined from the detection operations described above may be determined by a bin difference value being greater than an ambient threshold value) and the following:

$$\text{Median phase} = \text{Phase1} + (|\text{diff\_data(ta)}|/ |\text{diff\_data(ta)}|+|\text{diff\_data(tb)}|)$$

The operation of determining the median phase is shown in Figure 10 by step 1007.

Furthermore the range time may then be determined by multiplying the median phase value with the quantisation time $t_{quant}$ or in other words

$$\text{Range time} = \text{Median phase} * t_{QUANT}$$

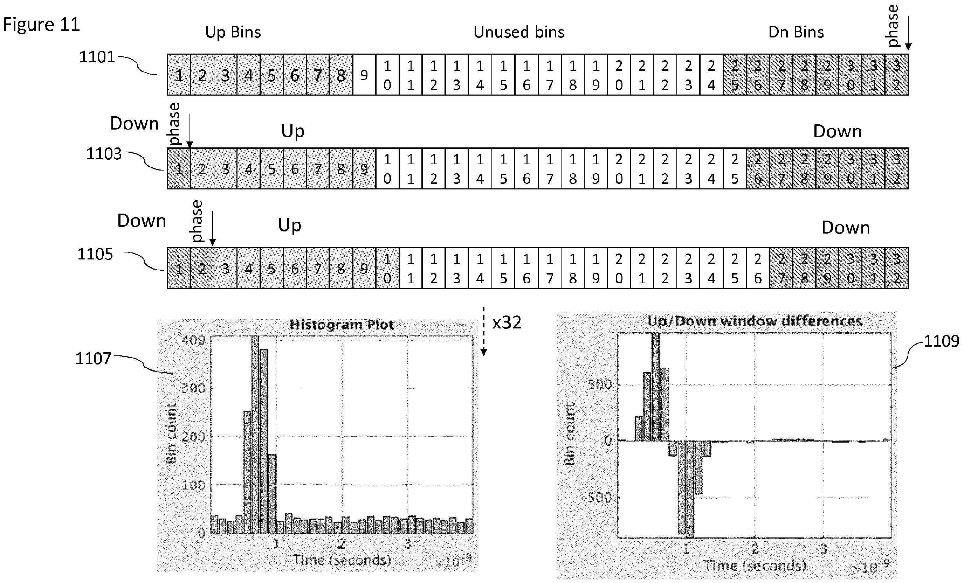

The application of this method can be shown for example in Figure 11 which shows for an example 32 bin histogram plot where the first three of 32 allocations of up bins, down bins and unused bins are shown. Thus the first allocation where the phase is at the start of bin 1 is such that the first allocation 1101 shows the down bins are bins 25 to 32, the up bins are 1 to 8. The second allocation 1103 shows the down bins are bins 26 to 32 and 1, the up bins are 2 to 9. The third allocation 1105 shows the down bins are bins 27 to 32 and 1 to 2, the up bins are 3 to 10.

Thus from the histogram plot 1107 the up-down window differences may be determined and plotted 1109 which would enable a pulse to be detected (from the difference values being greater than the threshold) and furthermore from the zero-crossover detection.

It should be appreciated that the device may be any suitable device. By way of example only and without limitation, that device may be a mobile telephone, smart phone, tablet, computer, measuring device, switch controller such as for a light, controlling a water supply such as in a tap or toilet, door controller, distance sensor, impact controller, or any other suitable device.

Some embodiments may use other sensors, instead of SPADs. These sensors may be integrating elements generating events on reception of the light information. Some embodiments may use any photon sensitive detector.

Some embodiments may have infrared applications. The light source would be replaced by an infrared source and the detector array would be sensitive to infrared radiation.

It should be appreciated that the above described arrangements may be implemented at least partially by an integrated circuit, a chip set, one or more dies packaged together or in different packages, discrete circuitry or any combination of these options.

For example the detector and optionally the processor may be provided on an integrated circuit or die. The detector and optionally the processor may be packaged in a module with the light emitter.

Various embodiments with different variations have been described here above. It should be noted that those skilled in the art may combine various elements of these various embodiments and variations.

Such alterations, modifications, and improvements are intended to be part of this disclosure, and are intended to be within the scope of the present invention. Accordingly, the foregoing description is by way of example only and is not intended to be limiting. The present invention is limited only as defined in the following claims.

**Claims**

1. A method for processing a histogram output from a photosensitive sensor, the method comprising:

   receiving, from a phase weighted filter, the histogram output as filtered histogram data comprising a plurality of histogram bin values indicative of a number of photodetection events, the filtered histogram data comprisng a pulse waveform with a defined width and histogram bin position;
   calculating a median point of the pulse waveform within the histogram, the pulse waveform having an even probability distribution over at least one quantisation step of the histogram around the median point; and
   determining from the filtered histogram data and based on the median point at least one object range associated with the pulse waveform,
   wherein the phase weighted filter is a three-part window comprising a first part (A), a second part (B), and a third part (C), and calculating the median point of the pulse waveform within the histogram comprises:

   generating a first difference value based on the sum of the first part, the second part and a negative third part;
   generating a second difference value based on the sum of the second part, the third part and a negative first part,
   wherein, for at least one histogram position, the first difference value and the second difference value are greater than zero, the determined median point is given by 0.5 + ((the third part value - the first part value) / (2 * (the second part value - a determined ambient value))).

2. The method as claimed in claim 1, wherein determining, from the filtered histogram data and based on the median point, the at least one object range associated with the pulse waveform further comprises:
   applying a linear interpolation at a valid positive zero crossing to a phase weighted filtered histogram to determine a phase value, wherein the phase value is used to determine the median point.

3. The method as claimed in any of claims 1 to 2, wherein the method further comprises determining from the filtered histogram data a range noise estimate associated with the pulse waveform, wherein determining the range noise estimate comprises:

    determining shot noise contributions from each filter part; and
    combining the shot noise contributions from each filter part to generate the range noise estimate.

4. The method as claimed in claim 3, wherein determining from the filtered histogram data the range noise estimate associated with the pulse waveform comprises:
   generating a noise value based on a phase weighted filtered histogram, the phase weighted filter comprising the first part A, the second part B located at the detected median event bin and the third part C, and wherein the noise value is

$$\text{Noise}_{combined} = \sqrt{\left(\frac{C+A}{4\times(B-amb)^2}\right) + \left(\frac{(C-A)^2\times(B+amb)}{4\times(B-amb)^4}\right)}$$

$$= \sqrt{Noise_{Numerator}^2 + Noise_{Denominator}^2}$$

where $\text{Noise}_{numerator} = \frac{\sqrt{C+A}}{2(B-amb)}$ and $\text{Noise}_{denominator} = \left|\frac{C-A}{2(B-amb-\sqrt{(B+amb)})} - \frac{C-A}{2(B-amb)}\right|$,

and amb is a determined ambient level.

5. The method as claimed in claim 3 or 4, wherein determining from the filtered histogram data the range noise estimate associated with the pulse comprises:
   generating a noise value based on a phase weighted filtered histogram, the phase weighted filter comprising the first part A, the second part B located at the detected median event bin and the third part C, and wherein the noise values is

$$Noise_{phase} = \sqrt{\left(\frac{C + C_x + A + A_x}{4 \times (B - B_x - amb)^2}\right) + \left(\frac{(C - C_x - (A - A_x))^2 \times (B + B_x + amb)}{4 \times (B - B_x - amb)^4}\right)}$$

   , and $A_x$, $B_x$ and $C_x$ are internal parasitic path components associated with the phase weighted filter first part, second part and third part respectively and amb is a determined ambient level.

6. The method as claimed in any of claims 1 to 5, wherein determining from the filtered histogram data and based on the median point a maximum distance detection value comprises determining based on a threshold from an ambient level and a return level from a determined calibration value the distance at which a returned signal is not significant to determine a range determination.

7. The method as claimed in claims 1 to 6, comprising determining from the filtered histogram data and based on the median point a maximum distance value Dmax, and wherein Dmax is:

$$Dmax = Part\ A\ /Part\ B$$

   Where

$$Part\ A = Dcal \times 2 \times Signal@Dcal \times \frac{Ref}{Ref@Dcal}$$

   and

$$Part\ B = Sconf \times \sqrt{Signal@Dcal \times \frac{Ref}{Ref@Dcal}} \pm$$

$$\sqrt{\left(Sconf^2 \times Signal@Dcal \times \frac{Ref}{Ref@Dcal}\right) + \left(4 \times Signal@Dcal \times \frac{Ref}{Ref@Dcal} \times \left(\left(Aconf \times \sqrt{Ambient}\right)\right)\right)},$$

wherein
a distance at which a Dmax calibration is taken defined by Dcal, a signal value in events/bin generated from a 100% target at the Dmax calibration distance defined as Signal@Dcal, a value of reflectance of target used for signal calibration defined as Ref@Dcal, a desired reflectance that Dmax is to be calculated for defined as Ref, the ambient count defined as Ambient, the signal confidence defined as SConf, and an ambient noise floor aligned with the histogram processing assumption defined as Aconf.

8. An apparatus for processing a histogram output from a photosensitive sensor, the apparatus comprising:

an input configured to receive, from a phase weighted filter, the histogram output as filtered histogram data comprising a plurality of histogram bin values indicative of a number of photodetection events, the filtered histogram data comprising a pulse waveform with a defined width and histogram bin position;
a median point determiner configured to calculate a median point of the pulse waveform within the histogram, the pulse waveform having an even probability distribution over a quantisation step of the histogram around the median point; and
a parameter extractor configured to determine, from the filtered histogram data and based on the median point, at least one object range associated with the pulse waveform,
wherein the phase weighted filter is a three-part window comprising a first part (A), a second part (B), and a third part (C), and the parameter extractor is configured to:

generate a first difference value based on the sum of the first part, the second part and a negative third part;
generate a second difference value based on the sum of the second part, the third part and a negative first part,
wherein, for at least one histogram position, the first difference value and the second difference value are greater than zero, and the determined median point is given by 0.5 + ((the third part value - the first part value) / (2 * (the second part value - a determined ambient value))).

9. The apparatus as claimed in claim 8, wherein the parameter extractor is configured to determine from the filtered histogram data a range noise estimate associated with the pulse waveform, wherein determining the range noise estimate comprises:

determining shot noise contributions from each filter part; and
combining the shot noise contributions from each filter part to generate the range noise estimate.

10. The apparatus method as claimed in any of claims 8 to 9, wherein the parameter extractor configured to determine from the filtered histogram data a range noise estimate associated with the pulse waveform is configured to:
generate a noise value based on a phase weighted filtered histogram, the phase weighted filter comprising the first part A, the second part B located at the detected median event bin and the third part C, and wherein the noise value is

$$Noise_{phase} = \sqrt{\left(\frac{C + C_x + A + A_x}{4 \times (B - B_x - amb)^2}\right) + \left(\frac{((C - C_x - (A - A_x))^2 \times (B + B_x + amb)}{4 \times (B - B_x - amb)^4}\right)}$$

, and $A_x$, $B_x$ and $C_x$ are internal parasitic path components associated with the phase weighted filter first part, second part and third part respectively and amb is a determined ambient level.

11. The apparatus as claimed in any of claims 8 to 10, wherein the parameter extractor configured to determine from the filtered histogram data and based on the median point a maximum distance detection value is configured to determine a distance at which a returned signal is not significant to determine a range determination based on a threshold from an ambient level and a return level from a determined calibration value.

12. The apparatus as claimed in claims 8 to 10, wherein the parameter extractor is configured to determine a maximum distance value Dmax from the filtered histogram data and based on the median point, wherein Dmax is:

$$Dmax = Part\ A\ /Part\ B$$

Where

$$Part\ A = Dcal \times 2 \times Signal@Dcal \times \frac{Ref}{Ref@Dcal}$$

and

$$Part\ B = Sconf \times \sqrt{Signal@Dcal \times \frac{Ref}{Ref@Dcal}} \pm$$

$$\sqrt{\left(Sconf^2 \times Signal@Dcal \times \frac{Ref}{Ref@Dcal}\right) + \left(4 \times Signal@Dcal \times \frac{Ref}{Ref@Dcal} \times \left(\left(Aconf \times \sqrt{Ambient}\right)\right)\right)},$$

wherein

a distance at which a Dmax calibration is taken defined by Dcal, a signal value in events/bin generated from a 100% target at the Dmax calibration distance defined as Signal@Dcal, a value of reflectance of target used for signal calibration defined as Ref@Dcal, a desired reflectance that Dmax is to be calculated for defined as Ref, the ambient count defined as Ambient, the signal confidence defined as SConf, and an ambient noise floor aligned with the histogram processing assumption defined as Aconf.

13. The method as claimed in any of claims 1 to 7 or the apparatus as claimed in any of claims 8 to 12, wherein the photosensitive sensor is a single photon avalanche diode array sensor.

**Patentansprüche**

1. Verfahren zum Verarbeiten einer Histogrammausgabe von einem photosensitiven Sensor, wobei das Verfahren umfasst:

Empfangen der Histogrammausgabe als gefilterte Histogrammdaten, die eine Vielzahl von Histogramm-Bin-Werten, die eine Anzahl von Photodetektionsereignissen angeben, umfassen, von einem phasengewichteten Filter, wobei die gefilterten Histogrammdaten eine Pulswellenform mit einer definierten Breite und Histogramm-Bin-Position umfassen;
Berechnen eines Medianpunkts der Pulswellenform innerhalb des Histogramms, wobei die Pulswellenform eine gleichmäßige Wahrscheinlichkeitsverteilung über mindestens einen Quantisierungsschritt des Histogramms um den Medianpunkt herum aufweist; und
Bestimmen von mindestens einem Objektbereich, der mit der Pulswellenform assoziiert ist, aus den gefilterten Histogrammdaten und basierend auf dem Medianpunkt,
wobei das phasengewichtete Filter ein dreiteiliges Fenster ist, welches einen ersten Teil (A), einen zweiten Teil (B) und einen dritten Teil (C) umfasst, und Berechnen des Medianpunkts der Pulswellenform innerhalb des Histogramms umfasst:

Generieren eines ersten Differenzwerts basierend auf der Summe des ersten Teils, des zweiten Teils und eines negativen dritten Teils;

Generieren eines zweiten Differenzwerts basierend auf der Summe des zweiten Teils, des dritten Teils und eines negativen ersten Teils,
wobei für mindestens eine Histogrammposition der erste Differenzwert und der zweite Differenzwert größer als null sind, der bestimmte Medianpunkt durch 0,5 + ((der dritte Teilwert - der erste Teilwert) / (2 * (der zweite Teilwert - ein bestimmter Umgebungswert))) gegeben ist.

2. Verfahren nach Anspruch 1, wobei Bestimmen des mindestens einen Objektbereichs, der mit der Pulswellenform assoziiert ist, aus den gefilterten Histogrammdaten und basierend auf dem Medianpunkt des Weiteren umfasst:
Anwenden einer linearen Interpolation an einem gültigen positiven Nulldurchgang auf ein phasengewichtetes gefiltertes Histogramm, um einen Phasenwert zu bestimmen, wobei der Phasenwert verwendet wird, um den Medianpunkt zu bestimmen.

3. Verfahren nach einem der Ansprüche 1 bis 2, wobei das Verfahren des Weiteren Bestimmen einer Schätzung des Bereichsrauschens, das mit der Pulswellenform assoziiert ist, aus den gefilterten Histogrammdaten umfasst, wobei Bestimmen der Schätzung des Bereichsrauschens umfasst:

Bestimmen von Beiträgen des Schrotrauschens von jedem Filterteil; und
Kombinieren der Beiträge des Schrotrauschens aus jedem Filterteil, um die Schätzung des Bereichsrauschens zu generieren.

4. Verfahren nach Anspruch 3, wobei Bestimmen der Schätzung des Bereichsrauschens, das mit der Pulswellenform assoziiert ist, aus den gefilterten Histogrammdaten umfasst:
Generieren eines Rauschwerts basierend auf einem phasengewichteten gefilterten Histogramm, wobei das phasengewichtete Filter den ersten Teil A, den zweiten Teil B, der sich auf dem detektierten Medianereignis-Bin befindet, und den dritten Teil C umfasst, und wobei der Rauschwert

$$\text{Rauschen}_{\text{kombiniert}} = \sqrt{\left(\frac{C+A}{4\times(B-Umgebung)^2}\right) + \left(\frac{(C-A)^2\times(B+Umgebung)}{4\times(B-Umgebung)^4}\right)}$$

$$= \sqrt{Rauschen^2_{Z\ddot{a}hler} + Rauschen^2_{Nenner}}$$

ist, wobei $\text{Rauschen}_{\text{Zähler}} = \frac{\sqrt{C+A}}{2(B-Umgebung)}$ ist, und $\text{Rauschen}_{\text{Nenner}}$

$\left| \frac{C-A}{2(B-Umgebung -\sqrt{(B+Umgebung)})} - \frac{C-A}{2(B-Umgebung)} \right|$ ist, und Umgebung ein bestimmtes Umgebungsniveau ist.

5. Verfahren nach Anspruch 3 oder 4, wobei Bestimmen der Schätzung des Bereichsrauschens, das mit dem Puls assoziiert ist, aus den gefilterten Histogrammdaten umfasst:
Generieren eines Rauschwerts basierend auf einem phasengewichteten Histogramm, wobei das phasengewichtete Filter den ersten Teil A, den zweiten Teil B, der sich auf dem detektierten Medianereignis-Bin befindet, und den dritten Teil C umfasst, und wobei die Rauschwerte

$$Rauschen_{Phase}$$

$$= \sqrt{\left(\frac{C + C_x + A + A_x}{4 \times (B - B_x - Umgebung)^2}\right) + \left(\frac{(C - C_x - (A - A_x))^2 \times (B + B_x + Umgebung)}{4 \times (B - B_x - Umgebung)^4}\right)}$$

sind, und $A_x$, $B_x$ und $C_x$ interne parasitäre Pfadkomponenten sind, die mit dem ersten Teil, dem zweiten Teil beziehungsweise dem dritten Teil des phasengewichteten Filters assoziiert sind, und Umgebung ein bestimmtes Umgebungsniveau ist.

6. Verfahren nach einem der Ansprüche 1 bis 5, wobei Bestimmen aus den gefilterten Histogrammdaten und basierend auf dem Medianpunkt Bestimmen eines maximalen Abstandsdetektionswerts umfasst, basierend auf einem Schwellenwert von einem Umgebungsniveau und einem Rücklaufniveau von einem bestimmten Kalibrierungswert des Abstands, bei dem ein Rücklaufsignal für die Bestimmung einer Bereichsbestimmung nicht signifikant ist.

7. Verfahren nach einem der Ansprüche 1 bis 6, umfassend Bestimmen eines maximalen Abstandswerts, Dmax, aus den gefilterten Histogrammdaten und basierend auf dem Medianpunkt, und wobei Dmax

$$Dmax = Teil\ A\ /Teil\ B$$

ist, wobei

$$Teil\ A = \ Dcal \times 2 \times Signal@Dcal \times \frac{Ref}{Ref@Dcal}$$

ist, und

$$Teil\ B = Sconf \times \sqrt{Signal@Dcal \times \frac{Ref}{Ref@Dcal}} \pm$$
$$\sqrt{\left(Sconf^2 \times Signal@Dcal \times \frac{Ref}{Ref@Dcal}\right) + \left(4 \times Signal@Dcal \times \frac{Ref}{Ref@Dcal} \times \left(\left(Aconf \times \sqrt{Umgebung}\right)\right)\right)}$$

ist, wobei ein Abstand, bei dem eine Dmax-Kalibrierung durchgeführt wird, definiert ist durch Dcal, ein Signalwert in Ereignissen/Bin, generiert aus einem 100 % Ziel in dem Dmax-Kalibrierungsabstand, definiert ist als Signal@Dcal, ein Wert für den Reflexionsgrad des Zieles, das zur Signalkalibrierung verwendet wird, definiert ist als Ref@Dcal, ein gewünschter Reflexionsgrad, für den Dmax berechnet werden soll, definiert ist als Ref, die Umgebungszählung definiert ist als Umgebung, die Signalkonfidenz definiert ist als SConf, und ein Umgebungsrauschteppich, der mit der Histogrammverarbeitungsannahme ausgerichtet ist, definiert ist als Aconf.

8. Vorrichtung zum Verarbeiten einer Histogrammausgabe von einem photosensitiven Sensor, wobei die Vorrichtung umfasst:

einen Eingang, der zum Empfangen der Histogrammausgabe als gefilterte Histogrammdaten, die eine Vielzahl von Histogramm-Bin-Werten, die eine Anzahl von Photodetektionsereignissen angeben, umfassen, von einem phasengewichteten Filter konfiguriert ist, wobei die gefilterten Histogrammdaten eine Pulswellenform mit einer definierten Breite und Histogramm-Bin-Position umfassen;
einen Medianpunktbestimmer, der zum Berechnen eines Medianpunkts der Pulswellenform innerhalb des Histogramms konfiguriert ist, wobei die Pulswellenform eine gleichmäßige Wahrscheinlichkeitsverteilung über mindestens einen Quantisierungsschritt des Histogramms um den Medianpunkt herum aufweist; und
einen Parameterextraktor, der zum Bestimmen von mindestens einem Objektbereich, der mit der Pulswellenform assoziiert ist, aus den gefilterten Histogrammdaten und basierend auf dem Medianpunkt konfiguriert ist,
wobei das phasengewichtete Filter ein dreiteiliges Fenster ist, welches einen ersten Teil (A), einen zweiten Teil (B) und einen dritten Teil (C) umfasst, und der Parameterextraktor konfiguriert ist zum:

Generieren eines ersten Differenzwerts basierend auf der Summe des ersten Teils, des zweiten Teils und eines negativen dritten Teils;
Generieren eines zweiten Differenzwerts basierend auf der Summe des zweiten Teils, des dritten Teils und eines negativen ersten Teils,
wobei für mindestens eine Histogrammposition der erste Differenzwert und der zweite Differenzwert größer als null sind, und der bestimmte Medianpunkt durch 0,5 + ((der dritte Teilwert - der erste Teilwert) / (2 * (der zweite Teilwert - ein bestimmter Umgebungswert))) gegeben ist.

9. Vorrichtung nach Anspruch 8, wobei der Parameterextraktor zum Bestimmen einer Schätzung des Bereichsrauschens, das mit der Pulswellenform assoziiert ist, aus den gefilterten Histogrammdaten konfiguriert ist, wobei Bestimmen der Schätzung des Bereichsrauschens umfasst:

Bestimmen von Beiträgen des Schrotrauschens von jedem Filterteil; und
Kombinieren der Beiträge des Schrotrauschens aus jedem Filterteil, um die Schätzung des Bereichsrauschens zu generieren.

10. Vorrichtung nach einem der Ansprüche 8 bis 9, wobei der Parameterextraktor, der zum Bestimmen einer Schätzung des Bereichsrauschens, das mit der Pulswellenform assoziiert ist, aus den gefilterten Histogrammdaten konfiguriert ist, konfiguriert ist zum:
Generieren eines Rauschwerts basierend auf einem phasengewichteten Histogramm, wobei das phasengewichtete Filter den ersten Teil A, den zweiten Teil B, der sich auf dem detektierten Medianereignis-Bin befindet, und den dritten Teil C umfasst, und wobei der Rauschwert

$$Rauschen_{Phase}$$
$$= \sqrt{\left(\frac{C + C_x + A + A_x}{4 \times (B - B_x - Umgebung)^2}\right) + \left(\frac{(C - C_x - (A - A_x))^2 \times (B + B_x + Umgebung)}{4 \times (B - B_x - Umgebung)^4}\right)}$$

ist, und $A_x$, $B_x$ und $C_x$ interne parasitäre Pfadkomponenten sind, die mit dem ersten Teil, dem zweiten Teil beziehungsweise dem dritten Teil des phasengewichteten Filters assoziiert sind, und Umgebung ein bestimmtes Umgebungsniveau ist.

11. Verfahren nach einem der Ansprüche 8 bis 10, wobei der Parameterextraktor, konfiguriert zum Bestimmen eines maximalen Abstandsdetektionswerts aus den gefilterten Histogrammdaten und basierend auf dem Medianpunkt, konfiguriert ist zum Bestimmen eines Abstands, bei dem ein Rücklaufsignal für die Bestimmung einer Bereichsbestimmung basierend auf einem Schwellenwert von einem Umgebungsniveau und einem Rücklaufniveau von einem bestimmten Kalibrierungswert nicht signifikant ist.

12. Vorrichtung nach einem der Ansprüche 8 bis 10, wobei der Parameterextraktor zum Bestimmen eines maximalen Abstandswertes Dmax aus den gefilterten Histogrammdaten und basierend auf dem Medianpunkt konfiguriert ist, wobei Dmax

$$Dmax = Teil\,A\,/Teil\,B$$

ist, wobei

$$Teil\,A = Dcal \times 2 \times Signal@Dcal \times \frac{Ref}{Ref@Dcal}$$

ist, und

$$Teil\,B = Sconf \times \sqrt{Signal@Dcal \times \frac{Ref}{Ref@Dcal}} \pm$$
$$\sqrt{\left(Sconf^2 \times Signal@Dcal \times \frac{Ref}{Ref@Dcal}\right) + \left(4 \times Signal@Dcal \times \frac{Ref}{Ref@Dcal} \times \left((Aconf \times \sqrt{Umgebung})\right)\right)}$$

ist, wobei ein Abstand, bei dem eine Dmax-Kalibrierung durchgeführt wird, definiert ist durch Dcal, ein Signalwert in Ereignissen/Bin, generiert aus einem 100 % Ziel in dem Dmax-Kalibrierungsabstand, definiert ist als Signal@Dcal, ein Wert des Reflexionsgrads des Zieles, das zur Signalkalibrierung verwendet wird, definiert ist als Ref@Dcal, ein gewünschter Reflexionsgrad, für den Dmax berechnet werden soll, definiert ist als Ref, die Umgebungszählung definiert ist als Umgebung, die Signalkonfidenz definiert ist als SConf, und ein Umgebungsrauschteppich, der mit der Histogrammverarbeitungsannahme ausgerichtet ist, definiert ist als Aconf.

**13.** Verfahren nach einem der Ansprüche 1 bis 7 oder Vorrichtung nach einem der Ansprüche 8 bis 12, wobei der photosensitive Sensor ein Arraysensor mit Einzelphotonen-Avalanche-Dioden ist.


**Revendications**

**1.** Procédé destiné à traiter un histogramme délivré par un capteur photosensible, le procédé comprenant :

la réception, depuis un filtre pondéré en phase, de l'histogramme délivré sous la forme de données d'histogramme filtrées comprenant une pluralité de valeurs d'intervalle d'histogramme indicatives d'un nombre d'événements de photodétection, les données d'histogramme filtrées comprenant une forme d'onde d'impulsion avec une largeur et une position d'intervalle d'histogramme définies ;
le calcul d'un point médian de la forme d'onde d'impulsion à l'intérieur de l'histogramme, la forme d'onde d'impulsion ayant une distribution de probabilité uniforme sur au moins un pas de quantification de l'histogramme autour du point médian ; et
la détermination, à partir des données d'histogramme filtrées et sur la base du point médian, d'au moins une portée d'objet associée à la forme d'onde d'impulsion,
dans lequel le filtre pondéré en phase est une fenêtre en trois parties comprenant une première partie (A), une deuxième partie (B) et une troisième partie (C), et le calcul du point médian de la forme d'onde d'impulsion à l'intérieur de l'histogramme comprend :

la génération d'une première valeur différentielle basée sur la somme de la première partie, de la deuxième partie et d'une troisième partie négative ;
la génération d'une deuxième valeur différentielle basée sur la somme de la deuxième partie, de la troisième partie et d'une première partie négative,
dans lequel, pour au moins une position d'histogramme, la première valeur différentielle et la deuxième valeur différentielle sont supérieures à zéro, le point médian déterminé est donné par 0,5 + ((la valeur de la troisième partie - la valeur de la première partie) / (2 * (la valeur de la deuxième partie - une valeur ambiante déterminée))) .

**2.** Procédé selon la revendication 1, dans lequel la détermination, à partir des données d'histogramme filtrées et sur la base du point médian, de l'au moins une portée d'objet associée à la forme d'onde d'impulsion comprend :
l'application d'une interpolation linéaire à un passage par zéro positif valide à un histogramme filtré pondéré en phase pour déterminer une valeur de phase, la valeur de phase étant utilisée pour déterminer le point médian.

**3.** Procédé selon l'une quelconque des revendications 1 à 2, le procédé comprenant en outre la détermination, à partir des données d'histogramme filtrées, d'une estimation de bruit de portée associée à la forme d'onde d'impulsion, la détermination de l'estimation de bruit de portée comprenant :

la détermination de contributions au bruit de grenaille de chaque partie de filtre ; et
la combinaison des contributions au bruit de grenaille de chaque partie de filtre pour générer l'estimation de bruit de portée.

**4.** Procédé selon la revendication 3, dans lequel la détermination, à partir des données d'histogramme filtrées, de l'estimation de bruit de portée associée à la forme d'onde d'impulsion comprend :
la génération d'une valeur de bruit sur la base d'un histogramme filtré pondéré en phase, le filtre pondéré en phase comprenant la première partie A, la deuxième partie B située au niveau de l'intervalle d'événement médian détecté et la troisième partie C, et dans lequel la valeur de bruit est

$$Bruit_{combiné} = \sqrt{\left(\frac{C+A}{4\times(B-amb)^2}\right) + \left(\frac{(C-A)^2\times(B+amb)}{4\times(B-amb)^4}\right)}$$
$$= \sqrt{Bruit_{Numérateur}^2 + Bruit_{Dénominateur}^2}$$

où

$$Bruit_{Numérateur} = \frac{\sqrt{C+A}}{2(B-amb)}$$

et

$$Bruit_{Dénominateur} = \left|\frac{C-A}{2(B-amb-\sqrt{(B+amb)})} - \frac{C-A}{2(B-amb)}\right|,$$

et

*amb* est un niveau ambiant déterminé.

**5.** Procédé selon la revendication 3 ou 4, dans lequel la détermination, à partir des données d'histogramme filtrées, de l'estimation de bruit de portée associée à l'impulsion comprend :
la génération d'une valeur de bruit sur la base d'un histogramme filtré pondéré en phase, le filtre pondéré en phase comprenant la première partie A, la deuxième partie B située au niveau de l'intervalle d'événement médian détecté et la troisième partie C, et dans lequel la valeur de bruit est

$$Bruit_{Phase} = \sqrt{\left(\frac{C+C_x+A+A_x}{4\times(B-B_x-amb)^2}\right) + \left(\frac{(C-C_x-(A-A_x))^2\times(B+B_x+amb)}{4\times(B-B_x-amb)^4}\right)}$$

et $A_x$, $B_x$ et $C_x$ sont des composantes de chemin parasite internes respectivement associées à la première partie, la deuxième partie et la troisième partie du filtre pondéré en phase, et *amb* est un niveau ambiant déterminé.

**6.** Procédé selon l'une quelconque des revendications 1 à 5, dans lequel la détermination, à partir des données d'histogramme filtrées et sur la base du point médian, comprend la détermination d'une valeur de détection de distance maximale, sur la base d'un seuil à partir d'un niveau ambiant et d'un niveau de retour issu d'une valeur d'étalonnage déterminée, de la distance à laquelle un signal retourné n'est pas significatif pour déterminer une détermination de portée.

**7.** Procédé selon l'une quelconque des revendications 1 à 6, comprenant la détermination, à partir des données d'histogramme filtrées et sur la base du point médian, d'une valeur de distance maximale *Dmax,* et dans lequel *Dmax* est :

$$Dmax = Partie\ A/Partie\ B$$

où

$$Partie\ A = Dcal \times 2 \times Signal@Dcal \times \frac{Ref}{Ref@Dcal}$$

et

$$Partie\ B = Sconf \times \sqrt{Signal@Dcal \times \frac{Ref}{Ref@Dcal}} \pm$$

$$\sqrt{\frac{\left(Sconf^2 \times Signal@Dcal \times \frac{Ref}{Ref@Dcal}\right) +}{\left(4 \times Signal@Dcal \times \frac{Ref}{Ref@Dcal} \times \left(\left(Aconf \times \sqrt{Ambiant}\right)\right)\right)}}'$$

où une distance à laquelle un étalonnage de **Dmax** est réalisé est définie par *Dcal*, une valeur du signal en événements/intervalle générée à partir d'une cible à 100 % à la distance d'étalonnage de *Dmax* est définie par *Signal@Dcal*, une valeur de facteur de réflexion de la cible utilisée pour l'étalonnage du signal est définie par *Ref@Dcal*, un facteur de réflexion souhaité pour lequel *Dmax* doit être calculée est défini par *Ref*, le décompte ambiant est défini par *Ambiant*, la confiance du signal est définie par *SConf*, et un bruit de fond ambiant aligné sur l'hypothèse de traitement d'histogramme est défini par *Aconf*.

8. Appareil destiné à traiter un histogramme délivré par un capteur photosensible, l'appareil comprenant :

    une entrée configurée pour recevoir, depuis un filtre pondéré en phase, l'histogramme délivré sous la forme de données d'histogramme filtrées comprenant une pluralité de valeurs d'intervalle d'histogramme indicatives d'un nombre d'événements de photodétection, les données d'histogramme filtrées comprenant une forme d'onde d'impulsion avec une largeur et une position d'intervalle d'histogramme définies ;
    un dispositif de détermination de point médian configuré pour calculer un point médian de la forme d'onde d'impulsion à l'intérieur de l'histogramme, la forme d'onde d'impulsion ayant une distribution de probabilité uniforme sur un pas de quantification de l'histogramme autour du point médian ; et
    un extracteur de paramètres configuré pour déterminer, à partir des données d'histogramme filtrées et sur la base du point médian, au moins une portée d'objet associée à la forme d'onde d'impulsion,
    dans lequel le filtre pondéré en phase est une fenêtre en trois parties comprenant une première partie (A), une deuxième partie (B) et une troisième partie (C), et l'extracteur de paramètres est configuré pour :

        générer une première valeur différentielle basée sur la somme de la première partie, de la deuxième partie et d'une troisième partie négative ;
        générer une deuxième valeur différentielle basée sur la somme de la deuxième partie, de la troisième partie et d'une première partie négative,
        dans lequel, pour au moins une position d'histogramme, la première valeur différentielle et la deuxième valeur différentielle sont supérieures à zéro, et le point médian déterminé est donné par 0,5 + ((la valeur de la troisième partie - la valeur de la première partie) / (2 * (la valeur de la deuxième partie - une valeur ambiante déterminée))).

9. Appareil selon la revendication 8, dans lequel l'extracteur de paramètres est configuré pour déterminer, à partir des données d'histogramme filtrées, une estimation de bruit de portée associée à la forme d'onde d'impulsion, la détermination de l'estimation de bruit de portée comprenant :

    la détermination de contributions au bruit de grenaille de chaque partie de filtre ; et
    la combinaison des contributions au bruit de grenaille de chaque partie de filtre pour générer l'estimation de bruit de portée.

10. Appareil selon l'une quelconque des revendications 8 à 9, dans lequel l'extracteur de paramètres configuré pour déterminer, à partir des données d'histogramme filtrées, une estimation de bruit de portée associée à la forme d'onde d'impulsion est configuré pour :
    générer une valeur de bruit sur la base d'un histogramme filtré pondéré en phase, le filtre pondéré en phase comprenant la première partie A, la deuxième partie B située au niveau de l'intervalle d'événement médian détecté et la troisième partie C, et dans lequel la valeur de bruit est

$$Bruit_{Phase} = \sqrt{\left(\frac{C+C_x+A+A_x}{4\times(B-B_x-amb)^2}\right) + \left(\frac{(C-C_x-(A-A_x))^2\times(B+B_x+amb)}{4\times(B-B_x-amb)^4}\right)}$$

et $A_x$, $B_x$ et $C_x$ sont des composantes de chemin parasite internes respectivement associées à la première partie, la deuxième partie et la troisième partie du filtre pondéré en phase, et *amb* est un niveau ambiant déterminé.

11. Appareil selon l'une quelconque des revendications 8 à 10, dans lequel l'extracteur de paramètres configuré pour déterminer, à partir des données d'histogramme filtrées et sur la base du point médian, une valeur de détection de distance maximale, est configuré pour déterminer une distance à laquelle un signal retourné n'est pas significatif pour déterminer une détermination de portée sur la base d'un seuil à partir d'un niveau ambiant et d'un niveau de retour issu d'une valeur d'étalonnage déterminée.

12. Appareil selon l'une quelconque des revendications 8 à 10, dans lequel l'extracteur de paramètres est configuré pour déterminer une valeur de distance maximale *Dmax* à partir des données d'histogramme filtrées et sur la base du point médian, *Dmax* étant :

$$Dmax = Partie\ A/Partie\ B$$

où

$$Partie\ A = Dcal \times 2 \times Signal@Dcal \times \frac{Ref}{Ref@Dcal}$$

et

$$Partie\ B = Sconf \times \sqrt{Signal@Dcal \times \frac{Ref}{Ref@Dcal} \pm \sqrt{\left(Sconf^2 \times Signal@Dcal \times \frac{Ref}{Ref@Dcal}\right) + \left(4 \times Signal@Dcal \times \frac{Ref}{Ref@Dcal} \times \left(\left(Aconf \times \sqrt{Ambiant}\right)\right)\right)}}$$

où une distance à laquelle un étalonnage de *Dmax* est réalisé est définie par *Dcal*, une valeur du signal en événements/intervalle générée à partir d'une cible à 100 % à la distance d'étalonnage de *Dmax* est définie par *Signal@Dcal*, une valeur de facteur de réflexion de la cible utilisée pour l'étalonnage du signal est définie par *Ref@Dcal*, un facteur de réflexion souhaité pour lequel *Dmax* doit être calculée est défini par *Ref*, le décompte ambiant est défini par *Ambiant*, la confiance du signal est définie par *SConf*, et un bruit de fond ambiant aligné sur l'hypothèse de traitement d'histogramme est défini par *Aconf*.

13. Procédé selon l'une quelconque des revendications 1 à 7 ou appareil selon l'une quelconque des revendications 8 à 12, le capteur photosensible étant un capteur à réseau de diodes à avalanche à photon unique.

Figure 1A

Figure 1B

```
┌─────────────────────────────┐
│  Receive/detect light photons │ ⟋ 150
└─────────────────────────────┘
              │
┌─────────────────────────────┐
│  Generate (SPAD) event counts │ ⟋ 152
│         in sensor            │
└─────────────────────────────┘
              │
┌─────────────────────────────┐
│  Generate raw histogram event │ ⟋ 154
│          counts              │
└─────────────────────────────┘
              │
┌─────────────────────────────┐
│  Process raw histogram event  │
│    counts to determine        │ ⟋ 156
│ parameters, e.g. range, noise,│
│        max range.            │
└─────────────────────────────┘
```

Figure 2A

103

```
┌──────────────┐      ┌──────────────┐      ┌──────────────┐      ┌──────────────┐
│              │      │  cross-talk  │      │Pulse detector│      │              │
│   Pile-up    │      │  detector/   │      │(pulse isolator│     │  Parameter   │
│  corrector   │─────▶│  extractor   │─────▶│  + pulse     │─────▶│  (e.g.Range) │────▶
│     201      │      │   (plane     │      │  blanking)   │      │  extractor   │
│              │      │ correction)  │      │     205      │      │     207      │
│              │      │     203      │      │              │      │              │
└──────────────┘      └──────────────┘      └──────────────┘      └──────────────┘
                             │                                            ▲
                             └────────────────────────────────────────────┘
```

EP 3 370 080 B1

Figure 2B

```
┌─────────────────────────┐
│    pile up correction    │──── 249
└─────────────────────────┘
              │
              ▼
┌─────────────────────────┐
│  Cross-talk subtraction  │──── 250
└─────────────────────────┘
              │
              ▼
┌─────────────────────────┐
│     Pulse detection      │──── 252
└─────────────────────────┘
              │
              ▼
┌─────────────────────────┐
│    Parameter (Range)     │──── 254
│       Extraction         │
└─────────────────────────┘
```

EP 3 370 080 B1

Figure 3

Target A
301

Target B
303

102

Figure 4A

| VCSEL event rate<br>*(Averaged over 4ns period)* | 10MHz | 100MHz | 1GHz |
|---|---|---|---|
| **Periods / VCSEL pulse** | 25 | 2.5 | 0.25 |
| 401 → Before OR tree | | | |
| 403 → After OR tree | | | Probability decreases through pulse Almost certain event occurs by pulse end |

EP 3 370 080 B1

Figure 4B

201

Pulse shaper
determiner
431

Missed count
probability
determiner
433

Histogram bin
scaler
435

Figure 4C

Learn pulse shaper width — 441

Estimate probability of missed counts due to pile up — 443

Corrected bins fed back to enable a more accurate estimate of pile up probability

Scale up RAW histogram bins by probability of missed counts — 445

Output corrected histogram — 447

Figure 4D

Bin counts weighted by fraction of pulse shaper overlap

**Penultimate bin:**
0.5*(1 - fractional full weighted part)

**Last bin:**
0.5*fractional full weighted part

Bin in question  451

**PS Width**  453

**PS Width**  453

| 6 | 7 | 8 | 9 | 10 |

0.5         1         0.5

461         463       465

Counts before this point do not affect bin in question

Counts in this region affect bin in question 50% of the time

Counts in this region always affect bin in question

Counts inside bin in question can affect count 50% of the time

Width of interest is PS width + 0.5 bins from centre of bin in question

457

EP 3 370 080 B1

Figure 4E

EP 3 370 080 B1

Figure 5A

Target

501

502 Desired light path

Phone housing coverglass

503

504 Cross-talk light path

552

550

SPAD array 553

VCSEL 551

EP 3 370 080 B1

Figure 5B

Figure 5C

```
             ┌─────────────────────┐
             │      Histogram       │
             │ (Raw and Cross-talk  │
             │  only) determiner    │
             │         531          │
             └─────────────────────┘
                        │
    203                 │
      ↴                 │
             ┌─────────────────────┐
             │ Cross-talk only      │
             │ histogram Processor  │
             │ (ambient remover +   │
             │     normaliser)      │
             │         533          │
             └─────────────────────┘
                        │
                        │
             ┌─────────────────────┐
             │ Raw Histogram        │
             │ processor (removal   │
             │ of Cross-talk        │
             │   components)        │
             │         535          │
             └─────────────────────┘
```

Figure 5D

```
        ┌─────────────────┐
        │  Determine Raw  │ ⌐ 541
        │    Histogram    │
        └────────┬────────┘
                 │
                 ▼
        ┌─────────────────┐
        │ Determine Cross-talk │ ⌐ 543
        │   only histogram │
        └────────┬────────┘
                 │
                 ▼
        ┌─────────────────┐
        │ Process Cross-talk │
        │   only histogram │ ⌐ 545
        │ (normalisation and/or │
        │  ambient removal) │
        └────────┬────────┘
                 │
                 ▼
        ┌─────────────────┐
        │ Process raw histogram │
        │ (removal of Cross-talk │ ⌐ 547
        │    components)  │
        └────────┬────────┘
                 │
                 ▼
        ┌─────────────────┐
        │  Output cross-talk │ ⌐ 549
        │ corrected histogram │
        └─────────────────┘
```

Figure 6A

Cross-talk
time

675

673

X

Y

Figure 6B

Figure 6C

Figure 6D

Figure 7A

EP 3 370 080 B1

# Figure 7B

Figure 7C

0lux  example    0mm   0 -> [ 4.000, 15.250]

741

743

745

747

749a      749b

EP 3 370 080 B1

Figure 7D

Figure 8A

205

207

```
┌─────────────────────┐
│ Ambient threshold   │
│     determiner      │──────┐
│        801          │      │
└─────────────────────┘      │    ┌──────────┐   ┌──────────┐   ┌──────────┐
                             ├────│ Criteria │   │  Pulse   │   │Parameter │
┌─────────────────────┐      │    │comparator│───│  filter  │───│extractor │
│   Bin difference    │      │    │   805    │   │ (padded  │   │   809    │
│     determiner      │──────┘    │          │   │ window)  │   │          │
│        803          │          └──────────┘   │   807    │   └──────────┘
└─────────────────────┘                          └──────────┘
```

48

EP 3 370 080 B1

Figure 8B

Figure 8C

EP 3 370 080 B1

Figure 8D

Figure 8E

Figure 8F

Figure 8G

Ambient window used to estimate ambient noise per bin — 1203

Find bin differences: each bin minus previous bin value
*(Or optionally a rolling window of +/-n bins)* — 1201

6 sigma ambient noise used as bin threshold for pulse detection on bin differences. — 1205

0 to 1 threshold transition found to determine pulse start bin(s) — 1207

Pulse centre flagged for calculation if both 0 crossing and ambient threshold criteria met — 1209

EP 3 370 080 B1

Figure 9

Figure 10

For each possible phase location, determine bins which will be allocated to up and down counts.　　1001

For each of the 32 possible phase locations:
- Sum all up bin values
- Sum all down bin values
- Find Dn – Up differences　　1003

ta= point at which Dn-up difference goes negative **within detection window**
tb= ta + 1　　1005

$$\text{Median phase} = \text{Phase1} + \frac{|\text{diff\_data(ta)}|}{|\text{diff\_data(ta)}|+|\text{diff\_data(tb)}|}$$　　1007

Range time　 = Median phase $*$ $t_{QUANT}$　　1009

EP 3 370 080 B1

Figure 11

**EP 3 370 080 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130175435 A1
- US 20160033644 A1
- DE 102013114737 A1